(19) Europäisches Patentamt
European Patent Office
Office européen des brevets

(11) EP 1 950 020 B1

(12) # EUROPEAN PATENT SPECIFICATION

(45) Date of publication and mention of the grant of the patent:
**28.08.2013 Bulletin 2013/35**

(21) Application number: **06810296.1**

(22) Date of filing: **20.09.2006**

(51) Int Cl.:
***B29C 33/04*** (2006.01) ***B29C 33/38*** (2006.01)
***B29C 45/27*** (2006.01) ***B29C 45/73*** (2006.01)
***B29C 45/78*** (2006.01)

(86) International application number:
**PCT/JP2006/318600**

(87) International publication number:
**WO 2007/034815 (29.03.2007 Gazette 2007/13)**

(54) **MOLD, MOLD TEMPERATURE REGULATION METHOD, MOLD TEMPERATURE REGULATION DEVICE, INJECTION MOLDING METHOD, INJECTION MOLDING MACHINE**

FORMWERKZEUG, VERFAHREN ZUR REGULIERUNG DER TEMPERATUR EINES FORMWERKZEUGS, VORRICHTUNG ZUR REGULIERUNG DER TEMPERATUR EINES FORMWERKZEUGS, SPRITZGIESSVERFAHREN, SPRITZGIESSMASCHINE

MOULE, PROCÉDÉ DE RÉGULATION DE TEMPÉRATURE DE MOULE, DISPOSITIF DE RÉGULATION DE TEMPERATURE DE MOULE, PROCÉDÉ DE MOULAGE PAR INJECTION, MACHINE DE MOULAGE PAR INJECTION,

(84) Designated Contracting States:
**AT**

(30) Priority: **21.09.2005 JP 2005273635**

(43) Date of publication of application:
**30.07.2008 Bulletin 2008/31**

(73) Proprietors:
- **Mitsubishi Heavy Industries, Ltd.**
  **Minato-ku**
  **Tokyo 108-8215 (JP)**
- **Mitsubishi Heavy Industries Plastic Technology Co., Ltd.**
  **Nagoya-shi, Aichi 453-8515 (JP)**

(72) Inventors:
- **BESSHO, Masahiro**
  **Nagoya-shi**
  **Aichi 453-8515 (JP)**
- **UWAJI, Tetsuo**
  **Nagoya-shi**
  **Aichi 453-8515 (JP)**
- **MURANAKA, Osamu**
  **Nagoya-shi**
  **Aichi 453-8515 (JP)**
- **MIYAGAWA, Satoshi**
  **Nagoya-shi**
  **Aichi 453-8515 (JP)**
- **TODA, Naoki**
  **Nagoya-shi**
  **Aichi 453-8515 (JP)**
- **WATANABE, Yoshinori**
  **Nagoya-shi**
  **Aichi 453-0862 (JP)**

(74) Representative: **Cardy, Sophie Marie**
**Cabinet Beau de Loménie**
**158, rue de l'Université**
**75340 Paris Cedex 07 (FR)**

(56) References cited:
**EP-A2- 0 909 626**
**WO-A1-94/13454**
**GB-A- 1 523 778**
**JP-A- 4 086 212**
**JP-A- 5 024 076**
**JP-A- 5 031 725**
**JP-A- 05 154 880**
**JP-A- 08 318 577**
**JP-A- 09 314 611**
**JP-A- 10 029 215**
**JP-A- 58 012 715**
**JP-A- 58 012 716**
**JP-A- 2002 046 159**
**JP-A- 2004 322 597**
**JP-A- 2005 014 278**
**US-A- 5 423 670**
**US-A1- 2002 024 158**
**US-A1- 2004 188 886**
**US-A1- 2004 195 728**
**US-A1- 2005 189 665**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 950 020 B1

## Description

BACKGROUND OF THE INVENTION

1. Field of the Invention

The present invention relates to a mold of an injection molding machine for molding a sheet made of a thermoplastic resin such as a light conduction plate, diffusion plate, or the like having one surface wholly formed with a pattern of numerous fine concavities and convexities, and more particularly to a mold, a mold temperature adjusting method, a mold temperature adjusting apparatus, an injection molding method, an injection molding machine, and a thermoplastic resin sheet, cooperatively configured to enhance transferability for a molded article surface such that the molded article is taken out immediately after solidification to thereby hasten the molding cycle, by adopting a mold made of a material having such a thermal conductivity capable of keeping a mold cavity temperature exceeding a glass transition point of a resin for a predetermined period of time upon injection molding thereof.

2. Description of the Related Art

Rapid solidification of a resin within a mold at a low-temperature in a resin filling process results in a rough surface of a molded article with insufficient transferability of a mold surface. To avoid it, there has been proposed a molding method configured to warm a mold before filling of a resin, and after filling thereof, to pass a cooling medium liquid through heat medium passages within the mold to quickly cool a molded article, thereby shortening a cycle time of a molding process. Such a molding method, presented in Japanese Patent No. 3601463 (FIG. 2) is a conventional example of a method for molding a light conduction plate for a liquid crystal display in a shape of thin sheet having one surface wholly formed with a pattern of fine concavities and convexities, and the production method will be generally described hereinafter.

The molding method is one for an injection molding machine configured to: previously heat a cavity surface for molding a light conduction plate having a diagonal dimension of 14 inches or longer, to a temperature at or higher than a glass-transition temperature for an excellent flowability of a resin material; fill a molten resin into the cavity at a slow injection rate of 15 $cm^3$/sec or less; after filling, lower the temperature of the cavity surface of the mold, down to a temperature below the glass-transition temperature, thereby solidifying the molded article; and to open the mold to take out the molded article therefrom.

Further, the material for forming the cavity surface of the mold to be used in such a molding method, is supposed to be preferably one having an improved thermal conductivity such as beryllium copper or the like, so as to enhance a heating rate and a cooling rate of the cavity surface to thereby shorten the molding cycle time.

In turn, for a method to accurately control a mold temperature in a short time so as to shorten a molding cycle and so as to improve a pattern transference precision, there have been proposed: a mold for injection molding, having a supply device of a high-temperature heat medium and supply means for supplying the high-temperature heat medium into the mold, a supply device of an intermediate-temperature heat medium and supply means for supplying the intermediate-temperature heat medium into the mold, and a supply device of a low-temperature heat medium and supply means for supplying the low-temperature heat medium into the mold; and a production method of an injection mold article, configured to supply the high-temperature heat medium into a heat medium passage in the mold to raise the temperature of the mold before injection of a molten resin, to subsequently change over the heat medium to be supplied to the intermediate-temperature heat medium to thereby keep the mold temperature at a substantially constant temperature, and to supply the low-temperature heat medium into the heat medium passage in the mold after injection of the molten resin to thereby cool the mold (JP-2004-322597A (FIG. 1)).

The molding method according to the conventional example described in Japanese Patent No. 3601463 consists in previously heating the cavity surface of the mold to the temperature at or higher than the glass-transition temperature for an excellent flowability of the resin material, filling the molten resin into the cavity at the lower injection rate, and cooling the mold and taking out the molded article therefrom, resulting in that the method is excellent in fine reproducibility of the surface of the molded article but exhibits a problem of a deteriorated productivity due to the extended molding cycle.

Meanwhile, the production method of an injection mold article according to the conventional example described in JP-2004-322597A requires three systems of temperature adjustment devices, cooperative heat medium supply means, heat medium recovery tanks, and the like so as to supply the three types of heat media at high-temperature, intermediate-temperature, and low-temperature, respectively, resulting in a large number of devices and in complicated controlling means. Further, since the intermediate-temperature heat medium is required to be kept supplied for a long time so as to restrict temperature elevation due to heat brought about by the molten resin during the injection process and the dwelling process in a manner to keep the mold at an intermediate-temperature, and since a long time is required for cooling a molded article according to its embodiment, the molding cycle time is considerably extended to apparently result in increased circulation amounts of the heat media and increased thermal energies to be consumed.

A mold as defined in the preamble of claim 1 is disclosed in document GB 1523 778.

SUMMARY OF THE INVENTION

It is therefore an object of the present invention to provide a mold, a mold temperature adjusting method, a mold temperature adjusting apparatus, an injection molding method, an injection molding machine, cooperatively capable of preserving a fine reproducibility of a surface of a molded article and shortening a molding cycle, by duly adopting a material constituting a cavity surface of the mold so as to utilize amounts of heat possessed by a molten resin for heating the cavity surface, and so as to attain a higher efficiency of heat medium supply amounts during a dwelling process and a cooling process to thereby save thermal energy.

The present invention solves the above problem, by the following first through sixteenth implementations.

The first implementation resides in a mold comprising:

a fixed side mold-half configured with a fixed side mold master and a movable side mold-half configured with a movable side mold master;

a fixed side liner attached to the fixed side mold master and a movable side liner attached to the movable side mold master, the fixed side liner and movable side liner having open sides forming cavity surfaces, respectively, the fixed side liner and movable side liner having multiple heat medium passages formed therethrough in positions at constant distances from the cavity surfaces, respectively, the fixed side liner and movable side liner being in rectangular plate shapes having thicknesses of 15 to 30 mm and made of metal having a thermal conductivity of 20 to 40 W/(m·K);

thermal insulation plates interposed between the liners and the mold masters, respectively, the thermal insulation plates each having a thermal conductivity of 5 W/(m·K) or less;

pairs of heat medium manifolds attached to both edges of those surfaces of the liners which are reverse to the cavity surfaces, respectively, in a manner that the heat medium manifolds are communicated with the heat medium passages of the liners, respectively; and

multiple hold members for holding four edges of each of the liners to fix the liners to the mold masters, respectively.

The second implementation resides in the mold of the first implementation, wherein the liners are each made of a material comprising stainless steel, and
wherein the thermal insulation plates are each made of glass fiber reinforced heat-resistant resin, or ceramics.

The third implementation resides in a mold temperature adjusting apparatus comprising: mold of the first implementation; intermediate-temperature adjustment means for thermally adjusting a temperature of a heat medium to a specified temperature near a glass transition point of a resin for a molded article; low-temperature adjustment means for thermally adjusting the heat medium to a specified low-temperature; the mold temperature adjusting apparatus being configured to selectively change over between the heat medium thermally adjusted by the intermediate-temperature adjustment means and the heat medium thermally adjusted by the low-temperature adjustment means in a manner to supply the selected heat medium to the heat medium passages of the liners to thereby conduct temperature control of the liners;
wherein the mold temperature adjusting apparatus further comprises:

a plurality of liner temperature detecting means for detecting the liner temperatures of the fixed side mold-half and movable side mold-half, respectively;

liner temperature setting means for setting an intermediate-temperature heat medium temperature, a low-temperature heat medium temperature, a liner temperature for starting filling of molten resin into the mold, a liner temperature for stopping supply of the low-temperature heat medium and starting encapsulation of the low-temperature heat medium, and a liner temperature for finishing cooling of the filled resin and starting mold opening;

liner temperature controlling means for controlling liner temperatures to specified temperatures, respectively;

a timer for setting a dwelling limitation time;

a timer for setting a period of time from starting the dwelling until heat medium outlets are opened to supply the low-temperature heat medium into the liners;

a timer for setting a period of time from encapsulation of the low-temperature heat medium within the liners until the encapsulation is terminated and the intermediate-temperature heat medium is started to be supplied; and

display means capable of displaying the specified values in relation to a liner temperature curve for a molding process on a screen, and capable of switching the screen to display actually measured values of temperatures of the liners in an actual molding process, simultaneously with the specified values or by the actually measured values themselves.

The fourth implementation resides in an injection molding method adopting the mold temperature adjusting apparatus of the third implementation, for heating the liners of the mold before filling the molten resin and for cooling the liners after filling the molten resin, the method comprising the steps of:

supplying an intermediate-temperature heat medium to the liners, which medium is at substantially the same temperature as Tg where Tg is a glass transition point of the resin;
stopping supply of the intermediate-temperature heat medium at the time when the liner temperature has reached a temperature $T_H$=Tg-5°C to Tg-10°C which temperature $T_H$ is a liner temperature for starting a filling process;
closing the heat medium outlets to encapsulate the intermediate-temperature heat medium within the liners, and in this state, starting injection by a molding machine to fill a molten resin into the mold;
starting dwelling of the resin, and keeping the liner temperature raised to a temperature $T_s$=Tg to Tg+10°C by virtue of heat of the molten resin;
after a lapse of a specified time from the start of dwelling, opening the heat medium outlets and supplying a low-temperature heat medium into the liners to progress a cooling process of the liners in a manner to discharge the intermediate-temperature heat medium accumulated within the heat medium passages in the liners while continuing supply of the low-temperature heat medium;
terminating dwelling of the resin, after a lapse of a dwelling limitation time, or when the mold temperature has reached Tg or lower;
after the liner temperature has reached $T_M$=Tg-5°C to Tg-15°C, stopping supply of the low-temperature heat medium into the liners, and simultaneously therewith, closing the heat medium outlets to encapsulate the low-temperature heat medium within the liners to thereby conduct annealing of the liners;
when the liner temperature has reached a thermal deformation temperature $T_L$ of a molded article or lower, opening the mold to take out the molded article therefrom; and
subsequently, changing over to the intermediate-temperature heat medium, and opening the heat medium outlets to discharge the low-temperature heat medium from the liners, thereby raising the liner temperature toward the temperature $T_H$ for starting the filling process again.

The fifth implementation resides in a mold temperature adjusting method adopting the mold temperature adjusting apparatus of the third implementation, the method comprising the steps of:

displaying, on the screen of the display means of the injection molding machine, the actually measured mold liner temperature in the molding process according to the injection molding method of the fourth implementation, for each cycle of the injecting process;
adjusting specified values of an intermediate-temperature heat medium temperature ($T_{HW}$), a low-temperature heat medium temperature ($T_{LW}$), a filling star mold liner temperature ($T_H$), a low-temperature heat medium supply stop temperature ($T_M$), and a mold opening start liner temperature ($T_L$), in a manner to optimize the molding condition of a resin by the injection molding machine to thereby attain the shortest molding cycle time; and
monitoring the mold liner temperature during the injecting process.

The sixth implementation resides in an injection molding machine having the mold temperature adjusting apparatus of the third implementation, wherein the injection molding machine comprises a display view for setting an injecting/filling process condition, which display view is displayable on the same screen of the display means of the mold temperature adjusting apparatus, interchangeably with the display view of the display means of the mold temperature adjusting apparatus.

The seventh implementation resides in the mold of the first or second implementation, wherein the cavity surfaces and the heat medium passages are so arranged that:

$c/t \geq 0.58$, and $p/c \leq 1.1$
where "c" is a distance from each cavity surface to a center of the associated heat medium passage,
"t" is a thickness of each liner, and
"p" is a spacing pitch of the heat medium passages.

The eighth implementation resides in the mold of the first, second, or eighth implementation, wherein at positions where the heat medium passages and the associated manifolds are communicated with one another, the heat medium passages and the associated manifolds are so arranged that:

$$f \leq 3d$$

where "d" is an inner diameter of each heat medium passage; and
"f" is a depth from a distal edge of a communication hole of the associated manifold to a closed end of the heat medium passage.

The ninth implementation resides in the mold of the first, second, eighth, or ninth implementation, wherein the mold further comprises a molten resin gate bush pin penetrating through the associated one of the liners; and wherein the gate bush pin has a side surface formed with a recess correspondingly to a position where applicable heat medium passages of the associated liner interfere with the gate bush pin, thereby avoiding occurrence of constriction in the heat medium passages.

The tenth implementation resides in the mold of the first, second, eighth, or ninth implementation, wherein the mold further comprises a molten resin gate bush pin penetrating through the associated one of the liners; and wherein the gate bush pin has a side surface formed with a groove concentrically with a central axis of the gate bush pin correspondingly to a position where applicable heat medium passages of the associated liner interfere with the gate bush pin, thereby defining a heat medium roundabout passage extending round about the gate bush pin.

The eleventh implementation resides in the mold of the first, second, eighth, or ninth implementation, wherein the mold further comprises a molten resin gate bush pin penetrating through the associated one of the liners; and wherein the liner has a liner hole which penetrates through the liner and into which the gate bush pin fits, in a manner that the liner hole has an inside surface formed with a groove concentrically with a central axis of the gate bush pin correspondingly to a position where the heat medium passages of the liner interfere with the gate bush pin, thereby defining a heat medium roundabout passage extending round about the gate bush pin.

The twelfth implementation resides in the mold of the first, second, eighth, or ninth implementation, wherein the mold further comprises a molten resin gate bush pin penetrating through the associated one of the liners; and wherein the liner has a liner hole which penetrates through the liner and into which the gate bush pin fits, in a manner that the gate bush pin has a side surface formed with a groove concentrically with a central axis of the gate bush pin and the liner hole has an inside surface formed with a groove also concentrically with the central axis, both correspondingly to a position where the heat medium passages of the liner interfere with the gate bush pin, such that the groove of the gate bush pin and the groove of the liner hole cooperatively define a heat medium roundabout passage extending round about the gate bush pin when the gate bush pin is fitted into the liner hole.

The thirteenth implementation resides in the mold of the first, second, eighth, or ninth implementation, wherein the mold further comprises a molten resin gate bush pin penetrating through the associated one of the liners; and wherein the liner has a liner hole which penetrates through the liner and into which the gate bush pin fits, in a manner that the gate bush pin has a side surface with large outer diameter and small outer diameter portions to form a stepped portion therebetween and the liner hole also has an inside surface with large inner diameter and small inner diameter portions to form a stepped portion therebetween, both correspondingly to a position where the heat medium passages of the liner interfere with the gate bush pin, such that the stepped portions of the gate bush pin and liner hole cooperatively define a space extending around the pin by virtue of the positional difference therebetween, and the space defines a heat medium roundabout passage extending round about the gate bush pin when the gate bush pin is fitted into the liner hole.

The fourteenth implementation resides in the mold of the eleventh, twelfth, thirteenth, or fourteenth implementation, wherein the heat medium passages penetrating through the liner are provided with transverse heat medium passages near upstream and downstream sides of the gate bush pin, respectively, correspondingly to a position or level where the heat medium passages of the liner interfere with the gate bush pin, such that the passages transversely communicate the heat medium passages with one another, respectively.

The fifteenth implementation resides in the mold of the first, second, eighth, or ninth implementation, wherein the mold further comprises a molten resin gate bush pin penetrating through the associated one of the liners; and wherein the gate bush pin has a side surface formed with grooves, which grooves are located to oppose each other in the direction of heat medium passage about a central axis of the gate bush pin, and which grooves are oriented in a direction substantially perpendicular to the heat medium passages, and the gate bush pin is formed with heat medium communication passages penetrating the gate bush pin substantially perpendicularly to the opposed grooves to thereby communicate the grooves with each other, respectively, thereby defining a heat medium roundabout passage extending substantially round about the gate bush pin.

The invention recited in claim 1 adopts the mold of the first implementation in a molding machine, such that the liners are configured to be attached to the mold masters acting as the mold-halves with the thermal insulation plates interposed therebetween, respectively, and the liners have multiple heat medium passages formed therethrough in a manner slightly separated from the cavity surfaces of the liners such that the liners are made of metal which appears to have a lower thermal conductivity, resulting in that heat from the hot molten resin is conducted and spread over the whole liners without irregularity in a manner without absorption of the heat directly by the liners and by heat media flowing through the heat medium passages and without conduction of the heat from the liners to the mold masters, to thereby raise the temperatures of the liners to proper values slightly higher than the glass transition point, thereby enabling to easily transfer a pattern engraved on the liner, onto a molded article (see exemplary configuration #1 and exemplary configuration #2).

The invention recited in claim 2 adopts the second implementation in the mold such that the liners are each made of a typical stainless, and the heat insulator is also made of a typical heat-resistant composite material, which are both easily available and inexpensive.

The invention recited in claim 3 resides in the mold temperature adjusting apparatus of the third implementation, and is configured to optimally control the mold liner temperatures in the first and second implementations, thereby providing a configuration capable of transferring a pattern of fine concavities and convexities onto a molded article with an excellent productivity of molded articles.

The invention recited in claim 4 resides in the injection molding method of the fourth implementation, and consists in injecting a molten resin at a liner temperature slightly lower than the glass transition point of the resin for a molded article; simultaneously therewith, encapsulating the heat medium into the liners; shifting into a dwelling process such that the liners keep a temperature slightly higher than the glass transition point of the resin by virtue of heat radiation from the resin, thereby enabling to prepare an optimum temperature condition (also capable of avoiding irregularities of temperatures, position by position of the liners) for transference of a pattern of fine concavities and convexities onto the molded article; and the invention is further configured, in the cooling process, to supply low-temperature medium to cool the liners of the mold in a manner to gradually progress the cooling by encapsulating the low-temperature heat medium within the liners in the course of cooling, and to conduct mold opening and taking out of the molded article at a temperature at or lower than the thermal deformation temperature of the molded article, thereby resulting in decreased thermal energy loss of the intermediate-temperature heat medium and low-temperature heat medium (see exemplary configuration #1, exemplary configuration #2, and exemplary configuration #4).

The invention recited in claim 5 is the thermoplastic resin sheet of the fifth implementation configured in a manner to adopt the apparatus of the third implementation and to adopt the injection molding method of the fourth implementation, thereby allowing obtainment of a molded article having a higher transference precision with an excellent productivity (see exemplary configuration #1 and exemplary configuration #2).

The invention recited in claim 6 is the mold temperature adjusting method of the sixth implementation, configured to display the respective temperature conditions parallelly to the molding process on the image display means of the injection molding machine, thereby enabling to facilitate setting and monitoring of the liner temperatures during the respective processes.

The invention recited in claim 7 is so configured that the display view for setting an injecting/filling process condition is displayable on the image display means of the injection molding machine of the seventh implementation, interchangeably with the display view of the display means of the mold temperature adjusting apparatus, thereby providing an excellent operability.

The invention recited in claim 8 resides in the mold of the eighth implementation configured to suggest the optimum position of the heat medium passages to eliminate irregularities of temperatures over the cavity surfaces of the mold liners (see exemplary configuration #3).

The invention recited in claim 9 resides in the mold of the ninth implementation according to the first, second, or eighth implementation, and is so configured that the depth from the distal edge of the communication hole of the associated manifold to the closed end of the heat medium passage is set to eliminate stalling of the flow of heat media, thereby effectively avoiding non-uniformity of heat conduction from the heat media and eliminating temperature irregularity of the liners.

The invention recited in claim 10 resides in the mold of the tenth implementation according to the first, second, eighth, or ninth implementation, and is configured to allow to avoid constriction in the heat medium passages of the liners even when the pitch of the heat medium passages is narrow, in a manner to effectively smooth the flow of heat media and to effectively avoid irregularity of heat conduction, thereby exhibiting an effect for uniformalizing the temperature of the cavity surfaces of the liners.

The invention recited in claim 11 resides in the eleventh implementation according to the first, second, eighth, or ninth implementation, wherein the mold further comprises a molten resin gate bush pin penetrating through the associated one of the liners; and wherein the gate bush pin has a side surface formed with a groove concentrically with a central axis of the gate bush pin correspondingly to a position where applicable heat medium passages of the associated liner interfere with the gate bush pin, thereby defining a heat medium roundabout passage extending round about the gate bush pin.

Thus, although a gate bush pin constituting a direct gate with valve gate having a valve function in a nozzle of a hot runner must have a larger diameter from a structural reason such that adoption of the gate bush pin constituting the direct gate with valve gate for a liner having heat medium passages therein with a narrow pitch results in interference of the gate bush pin with the heat medium passages to cause the gate bush pin to become obstructive to the heat medium passages, the invention under consideration has for effect to provide the roundabout passage for the heat medium passages to mitigate the affection on the heat medium passages of the liners, i.e., to avoid increase of conduit resistances of the heat medium passages due to the gate bush pin, in a manner to decrease deviations of flow rates in heat medium passages, thereby effectively keeping the temperature uniformity of the liner (the effects noted in this paragraph are common to claims 11 through 16).

Particularly, in the invention under consideration, the groove is configured to have a larger area interfacing with or occupying on the gate bush pin, thereby enabling to enhance the temperature adjustment effect for the gate bush pin and to effectively assemble the gate bush pin with a free rotational orientation.

The invention recited in claim 12 resides in the mold of the twelfth implementation according to the first, second, eighth, or ninth implementation, and provides such a specific effect for the gate bush pin, in addition to the effects by claim 1, claim 2, claim 8, or claim 9 and the common effects, that the gate bush pin diameter can be decreased with an arbitrary assembling orientation.

The invention recited in claim 13 resides in the mold of the thirteenth implementation according to the first, second, eighth, or ninth implementation, and provides such a specific effect for the gate bush pin, in addition to the effects by claim 1, claim 2, claim 8, or claim 9 and the common effects, that the heat medium roundabout passage is allowed to have an increased cross-sectional area to decrease a round about resistance, thereby enabling to improve the temperature uniformity of the liner and to assemble the gate bush pin with a free rotational orientation.

The invention recited in claim 14 resides in the mold of the fourteenth implementation according to the first, second, eighth, or ninth implementation, and provides such a specific effect for the gate bush pin, in addition to the effects by claim 1, claim 2, claim 8, or claim 9 and the common effects, that the heat medium roundabout passage is allowed to have an increased cross-sectional area to decrease a round about resistance, and fabrication of the heat medium roundabout passage is facilitated, thereby enabling to improve the temperature uniformity of the liner and to assemble the gate bush pin with a free rotational orientation.

The invention recited in claim 15 resides in the mold of the fifteenth implementation according to the eleventh, twelfth, thirteenth, or fourteenth implementation, and provides such a specific effect for the gate bush pin, in addition to the effects by claim 11, claim 12, claim 13, or claim 14, that the heat medium roundabout passage is allowed to have an increased cross-sectional area to decrease a round about resistance, and fabrication of the roundabout passage is facilitated, thereby enabling to improve the temperature uniformity of the liner and to assemble the gate bush pin with a free rotational orientation.

The invention recited in claim 16 resides in the mold of the sixteenth implementation according to the first, second, eighth, or ninth implementation, and provides such a specific effect for the gate bush pin, in addition to the effects by claim 1, claim 2, claim 8, or claim 9 and the common effects, that it becomes possible to ensure wider spaces acting as the manifolds at the gate bush pin, thereby enabling to effectively improve the flow rate distribution.

BRIEF DESCRIPTION OF THE DRAWINGS

FIG. 1 is a horizontal cross-sectional view of a mold according to an embodiment of the present invention including a fixed side mold-half and a movable side mold-half having liners thereof attached thereto, respectively, and a molded article;
FIG. 2 is an enlarged view of a part "C" of the molded article of FIG. 1;
FIG. 3 is front view of the liner only of the fixed side mold-half, viewed from a cavity side;
FIG. 4 is a cross-sectional view provided by rightwardly (clockwise) rotating a cross section A-A of FIG. 3;
FIG. 5 is a cross-sectional view provided by rightwardly (clockwise) rotating a cross section B-B of FIG. 3;
FIG. 6 is a schematic view of an injection molding machine having the mold of FIG. 1 attached thereto, and a mold temperature adjusting apparatus;
FIG. 7 is a display view for setting and instructing liner temperatures in respective temperature adjusting processes in a mold temperature control method according to the present invention;
FIG. 8 is a block diagram of a control system for controlling the injection molding machine and the mold temperature adjusting apparatus of FIG. 6;
FIG. 9 is a view corresponding to a cross section D-D of FIG. 3, showing an incoming flow of heat medium at an end of a heat medium passage;
FIG. 10 is a view corresponding to the cross section D-D of FIG. 3, showing an outgoing flow of heat medium at the end of the heat medium passage;
FIG. 11 is a cross-sectional view of the liners for explanation of temperature transitions thereof, (a) immediately after injection of a molten resin, and (b) several seconds after injection of the molten resin, respectively;
FIG. 12 is a display view of temperature curves of a fixed side liner and a movable side liner of the mold, showing an embodiment controlled according to the mold temperature control method of the present invention;
FIG. 13 is a view of a first embodiment of an improved gate bush pin, where FIG. 13(a) is a top view of the gate bush pin and FIG. 13(b) is a cross-sectional view in an E-E arrow direction of FIG. 13(a);

FIG. 14 is a view of a second embodiment of an improved gate bush pin, where FIG. 14(a) is a top view of the gate bush pin and FIG. 14(b) is a cross-sectional view in an F-F arrow direction of FIG. 14(a);

FIG. 15 is a view of a third embodiment of an improved gate bush pin, where FIG. 15(a) is a top view of the gate bush pin and FIG. 15(b) is a cross-sectional view in a G-G arrow direction of FIG. 15(a);

FIG. 16 is a view of a fourth embodiment of an improved gate bush pin, where FIG. 16(a) is a top view of the gate bush pin and FIG. 16(b) is a cross-sectional view in an H-H arrow direction of FIG. 16(a);

FIG. 17 is a view of a fifth embodiment of an improved gate bush pin, where FIG. 17(a) is a top view of the gate bush pin and FIG. 17(b) is a cross-sectional view in an I-I arrow direction of FIG. 17(a); and

FIG. 18 is a view of a sixth embodiment of an improved gate bush pin, where FIG. 18(a) is a top view of the gate bush pin, FIG. 18(b) is a cross-sectional view in a J-J arrow direction of FIG. 18(a), and FIG. 18(c) is a cross-sectional view in a K-K arrow direction of FIG. 18(a).

DETAILED DESCRIPTION OF THE PREFERRED EMBODIMENTS

There will be explained an embodiment according to the present invention of a configuration of liners for a mold, a temperature adjusting apparatus of the mold (liner) having the liners, and a temperature adjusting method of the mold (liner) with reference to the accompanying drawings, which embodiment is an example where both the liner of a fixed side mold-half and the liner of movable side mold-half use water as heat media during a molding process of an injection molding machine.

FIG. 1 is a horizontal cross-sectional view of a fixed side mold-half and a movable side mold-half having liners thereof attached thereto, respectively, and a horizontal cross-sectional view of a molded article; FIG. 2 is an enlarged view of a part "C" of the molded article of FIG. 1; FIG. 3 is a front view of the liner only of the fixed side mold-half, viewed from a cavity side; FIG. 4 is a cross-sectional view provided by rightwardly (clockwise) rotating a cross section A-A of FIG. 3; FIG. 5 is a cross-sectional view provided by rightwardly (clockwise) rotating a cross section B-B of FIG. 3; and FIG. 6 is a schematic view of an injection molding machine having the mold of FIG. 1 attached thereto, and a mold temperature adjusting apparatus.

FIG. 7 shows an example of a display view of specified temperature values of liners 48, 58 in respective molding processes; FIG. 8 is a block diagram of a control system for controlling the injection molding machine and the mold temperature adjusting apparatus of FIG. 6; FIG. 9 is a view corresponding to a cross section D-D of FIG. 3, showing an incoming flow of heat medium at an end of a heat medium passage; FIG. 10 is a view corresponding to the cross section D-D of FIG. 3, showing an outgoing flow of heat medium at the end of the heat medium passage; FIG. 11 is a cross-sectional view of the liners for explanation of temperature transitions thereof, immediately after injection of a molten resin and several seconds after injection of the molten resin, respectively; and FIG. 12 is an example of display view simultaneously displaying curves of actually measured temperatures of the fixed side liner and movable side liner.

Further, FIG. 13 through FIG. 18 are explanatory views of improved gate bush pins according to the present invention.

There will be firstly explained constitutions and functions of the mold and the liners, with reference to FIG. 1 through FIG. 5, and FIG. 9 through FIG. 12. FIG. 1 is a horizontal cross-sectional view of the fixed side mold-half and the movable side mold-half separated from each other in a mold open position, and viewed from the above in a state that a molded article 50 is placed therebetween. Reference numeral 48 designates the liner (also called "core plate") attached to a mold master 4 acting as the fixed side mold-half, and reference numeral 58 designates the liner attached to a mold master 5 acting as the movable side mold-half.

The fixed side liner 48 is fixed to the mold master 4 in a manner to hold four edges of the liner by four hold members 42, respectively, thereby enabling to accommodate distortions of the liner 48 by relieving the distortions at held portions of the liner even when the liner is extended and contracted due to repeated heating and cooling thereof. Similarly, the movable side liner 58 is fixed to the mold master 5 in a manner to hold four edges of the liner by four hold members 43, respectively, thereby enabling to accommodate distortions of the liner 58 by relieving the distortions at held portions of the liner, correspondingly to extension and contraction of the liner due to repeated heating and cooling thereof.

When the liner 48 and liner 58 are attached to the associated mold masters, respectively, open sides of the liners act as both sides of a cavity, respectively, while protruded portions of the four hold members 42 for holding the four edges of the fixed side liner 48 define edges of the cavity, respectively. Both the liner 48 and liner 58 are made of a metal material (such as stainless steel) having a thermal conductivity of 20 to 40 W/(m·K), and are in rectangular plate shapes having a thickness of 15 to 30 mm and having multiple heat medium passages (also called "temperature adjustment pipings") 48a, 58a penetratingly and parallelly formed within the plates in positions at constant distances from the cavity surfaces of the plates, respectively. Interposed between the mold master 4 and liner 48 and between the mold master 5 and liner 58 are thermal insulation plates 38, 39 (each made of a material such as glass fiber reinforced heat-resistant resin, or ceramics), respectively, each having a thermal conductivity of 5 W/(m·K) or less. The liners 48, 58 are each made of a typical stainless steel, and the thermal insulation plates 38, 39 are each made of a typical heat-resistant composite material, which are both easily available and inexpensive.

Formed over the whole surface of either the liner 48 or liner 58 at the cavity side, is a pattern of fine concavities and convexities like prisms having a pitch b=20 to 100 μm and a height h=10 to 100 μm as shown in FIG. 2. The liner 48 and liner 58 are attached to the mold master 4 and mold master 5, respectively, followed by clamping of the mold and filling of a molten resin thereinto, thereby molding the rectangle article 50 in a thin sheet shape (having a thickness of 3 mm or less) having a diagonal dimension of 17 inches or longer, i.e., a light conduction plate or diffusion plate to be used in a liquid crystal display or the like. Without limitation to the pattern of fine concavities and convexities like prisms directly formed on the liner surface in the above manner, it is also possible to form a pattern of concavities and convexities on a metal thin plate and to contact and place the metal thin plate with and on the surface of the liner 48 or liner 58 such that the pattern is brought to the cavity side. The required molding precision is that the pattern of concavities and convexities of the liner 48 or liner 58 is transferred to one side of the molded article 50, such that the prisms on the surface of the molded article have an average height which is 90% or more of an average height of the prisms on the mold cavity surface.

The liner 48 and liner 58 each has a pair of manifolds 49, 49 attached thereto at both side edges and reverse to the cavity such that the manifolds 49, 49 are placed to be communicated with the heat medium passages 48a, 58a of the liners 48, 58, respectively, and, as shown in FIG. 4, the heat medium passages 48a, 58a are penetratingly formed such that the distance "c" from the cavity surface to the center of the heat medium passages 48a, 58a meets a relationship of $c/t \geq 0.58$ for the thickness "t" of the associated liner, and a relationship of $p/c \leq 1.1$ for the spacing pitch "p" of the heat medium passages 48a, 58a.

At both edges of the liners 48, 58 reversely to the cavity surface, the incoming side manifolds 49 for supplying heat media (hot water, cool water) to the heat medium passages 48a, 58a, and the outgoing side manifolds 49 are fixedly provided, respectively. The incoming side manifold 49 has an inlet and the outgoing side manifold 49 has an outlet which are located at the same side (the supplying direction of the heat medium is opposite to the discharging direction of the heat medium, as shown by arrows in FIG. 3), and every adjacent two of the heat medium passages 48a, 58a are communicated with each other by associated connecting holes 48b, 58b, respectively, such that the connecting holes 48b, 58b are communicated with communication holes 49a of the manifolds 49 in a liquid sealed manner by seal packings 59, respectively. Although there is no room for fitting seal rings for sealing individual inlets and outlets of heat medium passages from the manifold when the heat medium passages of the liner have a narrow pitch of arrangement, it becomes possible to narrow a pitch of arrangement of the heat medium passages by connecting two heat medium passages to one hole of the manifold via seal ring in the above manner.

As shown in FIG. 9 and FIG. 10, at positions where the heat medium passages 48a, 58a of the liners 48, 58 are communicated with the manifolds 49, respectively, there is established a relationship of $f \leq 3d$ as indicated by arrow-headed flow lines where "d" represents an inner diameter of each of the heat medium passages 48a, 58a and "f" represents a depth from a distal edge of the connecting hole 48b to a closed end of each of the heat medium passages 48a, 58a, so that the heat medium flow is not stalled because the counter flow is advantageously converged into the main flow in both the incoming side (FIG. 9) and the outgoing side (FIG. 10), thereby enabling uniformization of temperature distributions of the liners 48, 58.

As shown in FIG. 5, while the fixed side liner 48 has a plurality of gate bush pins 68 buried therein for allowing passage of a molten resin fed through a hot runner 14 attached to the mold master 4 acting as the fixed side mold-half, there is a possibility that the gate bush pins 68 buried in the liner 48 and the heat medium passages 48a penetratingly formed through the liner 48 interfere with one another because the heat medium passages 48a are so numerous and have narrow spacings therebetween. Since there is a possibility at these portions to disturb the uniformity of the temperature distribution of the liner 48 when the spacings between the heat medium passage 48a are widened or when constriction of heat medium passages 48a is left to be caused due to the gate bush pins 68, the gate bush pins 68 each have both sides formed with recesses 68a, respectively, thereby avoiding the noted constriction without widening the spacing pitch of the heat medium passages 48a.

There will be explained constitutions of a mold clamping apparatus and an injection unit 10 of the injection molding machine 1, and a mold temperature adjusting apparatus 30, with reference to FIG. 6. There will be firstly explained the constitution of the mold clamping apparatus. The mold clamping apparatus is configured to include a base 18 having a fixed die plate 2 fixed thereto; the fixed die plate 2 has attached thereto the mold master 4 acting as the fixed side mold-half provided with the liner 48; and the mold master 5 acting as the movable side mold-half provided with the liner 58 opposed to the mold master 4 is attached to a movable die plate 3 which is guided by guide rails 19 laid on the base 18 and which is moved through a linear bearing in a manner opposed to the fixed die plate 2. Used for the movement of the movable die plate 3 (movement for opening and closing the mold) is a hydraulic cylinder 22 to be hydraulically actuated. It should be noted that it is possible to adopt an electromotive ball screw or the like, instead of hydraulic actuation.

Directly connected to rams 16 sliding within a plurality of mold clamping cylinders 2a internally included in the fixed die plate 2, are a plurality of tie-bars 15 each having one end formed with a screw groove, and the tie-bars 15 penetrate through through-holes of the movable die plate 3, respectively, such that a plurality of half nuts 17 placed at a side of the movable die plate 3 reverse to the mold are engaged with screw grooves 15a of the tie-bars 15 to thereby fix and constrain the movable die plate to the tie-bars in the pulling direction thereof. Provided to change over oil pressures for exemplarily driving the hydraulic cylinder 22 and mold clamping cylinder 2a, is an oil pressure changeover valve 21 configured to follow commands from an injection molding machine controlling apparatus 20.

The heat medium passages 48a of the liner 48 of the mold master 4 acting as the fixed side mold-half and the heat medium passages 58a of the liner 58 of the mold master 5 acting as the movable side mold-half, are communicated to heat medium outlets and inlets of the mold temperature adjusting apparatus 30, respectively. To rapidly conduct heat to thereby rapidly heat and cool the mold cavity surface, changeover valves of heat media are disposed at positions as close as possible to the liners 48, 58, respectively. Provided on the cavity surface of the liner 48 is a temperature sensor 65 contacted therewith, and so is a temperature sensor 66 contactedly provided on the cavity surface of the liner 58. Temperature signals detected by the temperature sensors 65, 66 are sent to a mold temperature control unit 45 of the injection molding machine controlling apparatus 20, so that the temperatures of the liners 48, 58 are controlled to be the same or controlled individually, depending on the molding conditions.

The injection unit 10 is of an electromotive type. There is provided a frame 6a integrally with an injection cylinder 6 having an injection nozzle which is abutted to a resin inlet of the mold master 4 acting as the fixed side mold-half during an operation of injection, and the frame 6a has a pair of servomotors 12, 12 attached thereto symmetrically at both sides of a center line of the injection cylinder 6, and the servomotors 12, 12 have output shafts having ball screw shafts 8, 8 directly connected thereto, respectively. The injection unit further includes an injection screw 7 provided in a manner to freely rotate and to be constrained in an axial direction by a movement frame 27, and the injection screw 7 is directly connected to an output shaft of an injection screw rotation driving motor 13 fixedly provided at the center of the movement frame 27, so that the injection screw achieves rotational feed and plasticization of a resin within the injection cylinder 6.

The movement frame 27 has a pair of ball screw nuts 9, 9 symmetrically attached thereto, and the ball screw shafts 8, 8 are meshed with the ball screw nut 9, 9, respectively. The pair of servomotors 12, 12 is synchronizedly and rotatedly driven so that the injection screw 7 is caused to axially advance and retract within the injection cylinder 6 to conduct an injection operation of a resin.

The injection unit 10 is configured to inject a molten resin into a cavity defined by the liner 48 and liner 58 upon clamping the mold master 4 acting as the fixed side mold-half and the mold master 5 acting as the movable side mold-half to each other. After cooling and solidification of a molded article, the mold master 5 acting as the movable side mold-half is released from the clamped coupling to the mold master 4 acting as the fixed side mold-half, and is separated from the mold master 4 acting as the fixed side mold-half by virtue of the operation of the hydraulic cylinder 22 for movement, thereby allowing the molded article to be taken out.

The injection molding machine controlling apparatus 20 is configured to provide instructions according to a program for a molding process, in a manner: to actuate the oil pressure changeover valve 21 to feed a hydraulic oil to respective hydraulic cylinders responsible to processes of the injection molding machine 1; to supply electric current to the servomotors 12, 12 for injection driving of the injection unit 10 to advance and retract the injection screw 7; and to supply electric current to the injection screw rotation driving motor 13 of the injection screw 7 to plasticize a resin.

The mold temperature adjusting apparatus 30 will be explained next. It includes a low-temperature water tank 23 which is a heat exchanger internally including a heat medium piping through which a cooling medium is passed to adjust low-temperature water at a specified low-temperature. The low-temperature water tank 23 has a low-temperature water temperature sensor 63 attached thereto for detecting a water temperature within the tank 23, and the signal of a detected value is received by a mold temperature control unit 45 which in turn controls a cooling medium amount to keep the water temperature at the specified temperature. The apparatus further includes: a low-temperature water pump 26 placed between a feed side piping 31a and a low-temperature water piping 31b coupled to the low-temperature water tank 23; a low-temperature water pump 29 placed between the low-temperature water piping 31b and a piping 31c; and an opening/closing valve 52 between the piping 31c and a supply piping 31e; and the supply piping 31e is coupled to the manifold 49 for the heat medium passages 48a of the liner 48.

The mold temperature adjusting apparatus further includes an opening/closing valve 56 placed between the piping 31c and a supply piping 32, the latter being connected to the manifold 49 for the heat medium passages 58a. The apparatus additionally includes: a return side piping 35a from the liner 48 and a return side piping 33 from the liner 58, which pipings are directly converged and connected to a piping 35c; an opening/closing valve 55 between the piping 35c and a piping coupled to the low-temperature water tank 23; and an opening/closing valve 54 between the piping 35c and a piping 35b coupled to an intermediate-temperature water tank 24.

The intermediate-temperature water tank 24 is a heat exchanger internally including a heat medium piping through which a heat medium is passed to adjust intermediate-temperature water at a specified intermediate-temperature, and has an intermediate-temperature water temperature sensor 64 attached to the tank itself for detection of the temperature of the intermediate-temperature water. The intermediate-temperature water temperature sensor 64 detects a water temperature within the intermediate-temperature water tank 24, and the signal of a detected value is received by the mold temperature control unit 45 which in turn controls an amount of heat medium passing through a heat medium piping of the intermediate-temperature water tank 24 to keep the temperature of the intermediate-temperature water at a specified temperature. The intermediate-temperature water tank 24 has an intermediate-temperature water supply piping 41 connected thereto having an intermediate-temperature water pump 28 attached thereto for circulation of intermediate-temperature water, and the piping 41 is connected to the supply piping 31e via opening/closing valve 57, and thus connected to the manifold 49 for the heat medium passages 48a of the liner 48.

Further, the intermediate-temperature water supply piping 41 is connected via opening/closing valve 53 to the supply piping 32 coupled to the manifold 49 for the heat medium passages 58a of the liner 58, while the return side piping 33 from the heat medium passages 58a of the liner 58 is once connected to the return piping 35a from the heat medium passages 48a of the liner 48 and then branched into the pipings 35b, 35c again, in a manner that the discharged return water in the piping 35b is returned into the intermediate-temperature water tank 24 via opening/closing valve 54 and the discharged return water in the piping 35c is returned into the low-temperature water tank 23 via opening/closing valve 55. Also when the opening/closing valves 52, 56 are closed and the opening/closing valves 57, 53 are opened so that the intermediate-temperature water is supplied into the liners 48, 58, discharged water from the liners 48, 58 is caused to pass through the return side pipings 35a, 33, and thereafter, returned into the intermediate-temperature water tank 24 via piping 35b when the opening/closing valve 54 is opened, and returned into the low-temperature water tank 23 via piping 35c when the opening/closing valve 55 is opened.

Closing the opening/closing valves 52, 56, opening the opening/closing valves 53, 57, and rotating the intermediate-temperature water pump 28, allows the intermediate-temperature water to flow through the heat medium passages 48a, 58a to heat the liners 48, 58. At this time, when the low-temperature water pump 26 is kept rotated to pass the water through a water pressure regulation valve 61 via low-temperature water piping 31b to thereby keep a highly set water pressure, this water pressure is transmitted to the intermediate-temperature water tank 24 through a couple piping 36 via recovery tank 25, thereby enabling to increase a saturated vapor pressure of the intermediate-temperature water to regulate and hold the temperature of the intermediate-temperature water at 100°C or higher.

It is also possible to conduct natural annealing, by closing the opening/closing valves 53, 57 and stopping the intermediate-temperature water pump 28 while filling the intermediate-temperature water within the heat medium passages 48a, 58a to encapsulate the intermediate-temperature water within the liners 48, 58. At this time, opening the opening/closing valves 52, 56 allows to reflux low-temperature water into the heat medium passages 48a, 58a of the liners 48, 58 to cool them.

The heat recovery tank 25 connected to the intermediate-temperature water tank 24 via piping 44 is a balance tank between intermediate-temperature water and low-temperature water and having a vertically cylindrical shape, which balance tank has a volume larger than a total of volumes of the heat medium passages 48a, 58a of the liners 48, 58, a volume within the supply piping 41 of intermediate-temperature water, volumes of the supply pipings 31e, 32, return side pipings 33, 35a after the coupling portion with the supply piping 41, and a volume within the piping 35b branched to the intermediate-temperature water side, which balance tank has at its upper portion an inlet from the piping 44 connected to the intermediate-temperature water tank 24, and at its lower portion a low-temperature water inlet connected to the couple piping 36 leading to the low-temperature water tank 23, and which balance tank is provided with means for restricting mixture of intermediate-temperature water with low-temperature water accommodated within the balance tank itself.

In changing over the heat media within the heat medium passages 48a, 58a of the liners 48, 58 from intermediate-temperature water to low-temperature water, the intermediate-temperature water is collected back into the intermediate-temperature water tank 24 while closing the opening/closing valve 55 and opening the opening/closing valve 54 and while monitoring a replacing state of the heat medium by the temperature sensors 65, 66 provided on the cavity surfaces of the liners 48, 58, and when the temperature sensors 65, 66 have detected that the intermediate-temperature water within the heat medium passages 48a, 58a is replaced by low-temperature water, the opening/closing valve 55 is opened and the opening/closing valve 54 is closed to stop collection of the intermediate-temperature water and the low-temperature water is refluxed. The overflowed amount of the intermediate-temperature water collected into the intermediate-temperature water tank 24 is fed to the recovery tank 25, and low-temperature water in that amount fed to the recovery tank 25 is returned from the recovery tank 25 into the low-temperature water tank 23 through the water pressure regulation valve 61.

As shown in FIG. 6, opening and closing of the opening/closing valves 52 through 57 within the mold temperature adjusting apparatus 30 are controlled by the mold temperature control unit 45 which is internally included in the injection molding machine controlling apparatus 20 and which is coordinated with the molding machine control. FIG. 8 is a block diagram of a control system, in which the blocks of components contacted with each other and the blocks connected by double lines indicate that the blocks are mechanically and internally included or abutted to each other; thick lines indicate connection by means of heat medium pipings; and thin lines indicate electric signal lines and power electric current wires. It should be noted that appellations labeled in the blocks of the components in FIG. 8 are expressed in a functional manner, so that some of them are not fully the same as those described above.

The mold temperature control unit 45 internally includes a control processing unit (CPU), storage means for storing therein specified values, actually measured values, display images, and the like, input and output circuits, and the like. Further, there is provided image display means (image panel) 46 of the injection molding machine controlling apparatus 20 at a location visible from an operator, so as to display specified values, actually measured values, and the like of temperatures of the liners 48, 58 in the molding processes required for controlling the mold temperature control unit 45, by a display view switching operation, not limited to the molding machine control. Provided near the image display means 46 is heat medium temperature setting means 47. FIG. 7 shows an example of display view of specified values of temperatures of the liners 48, 58 in respective molding processes, and FIG. 12 shows an example of display view simultaneously displaying temperature curves by actually measuring temperatures of the fixed side liner 48 and movable side liner 58.

Detected values of the temperature sensors 65, 66 for detecting temperatures of the liners 48, 58, respectively, are compared with specified values for temperatures of mold liners in respective processes in the mold temperature control unit 45, in a manner that when the liner temperatures are coincident with the specified values, the mold temperature control unit instructs the injection molding machine controlling apparatus 20 to shift into the next molding process, and instructs the mold temperature adjusting apparatus 30 to change the heat medium to be fed to the liners 48, 58 or to set a timer for determining the timing of change between heating process and cooling process.

There will be explained molding processes of the injection molding machine and processes and function of the mold temperature adjusting apparatus 30 cooperating therewith, with reference to FIG. 6, FIG. 7, and FIG. 8. During a process from mold closing to mold clamping, the opening/closing valves 53, 57, 54 of the mold temperature adjusting apparatus 30 are opened and the opening/closing valves 52, 56, 55 are closed, to thereby supply intermediate-temperature water in the intermediate-temperature water tank 24 into the liners 48, 58. Assuming that Tg represents a glass transition point of a resin, the intermediate-temperature water in the intermediate-temperature water tank 24 is adjusted to substantially the same temperature as Tg and supplied to the liners 48, 58, and filling of a molten resin is started when the temperature sensors 65, 66 of the liners 48, 58 have detected a specified temperature $T_H$=Tg-5°C to Tg-10°C. At the time the temperatures of the liners 48, 58 have reached $T_H$, the injection unit 10 of the molding machine is operated for injection in a state that the opening/closing valves 53, 57, 54 are closed, supply of the intermediate-temperature heat medium is stopped, the heat medium inlets are closed, and intermediate-temperature water is kept encapsulated within the heat medium passages 48a, 58a, so that the molten resin is filled into the cavity defined by the liners 48, 58.

The temperatures of the liners 48, 58 are raised to a temperature $T_s$=Tg to Tg+10°C by virtue of an amount of heat of the filled molten resin, and the dwelling process is started. The encapsulated intermediate-temperature water is maintained, to cause the temperatures of the liners 48, 58 to be naturally and gradually lowered; after a lapse of a specified time (specified by a low-temperature medium changeover timer S1) from the start of dwelling, the opening/closing valve 54 is opened and the opening/closing valves 52, 56 are opened to discharge and collect the intermediate-temperature water accumulated in the heat medium passages 48a, 58a of the liners 48, 58 and the intermediate-temperature water within the pipings into the intermediate-temperature water tank 24 while supplying low-temperature water into the liners 48, 58; and when the intermediate-temperature water within the liners 48, 58 and pipings is collected, the opening/closing valve 55 is opened and the opening/closing valve 54 is closed to continue supplying of the low-temperature heat medium, thereby progressing the cooling process of the liners 48, 58.

After a lapse of a specified time (specified by a dwelling process limit timer $S_H$) from the start of dwelling, or when the temperature sensors 65, 66 of the liners 48, 58 have detected that the liner temperatures have been brought to be Tg or lower, the dwelling of resin is finished. Next, when the temperature sensors 65, 66 have detected that the temperatures of the liners 48, 58 have reached a low-temperature heat medium supply stop/encapsulation start temperature $T_M$=Tg-5°C to Tg-15°C, the opening/closing valves 52, 56 are closed to stop supply of low-temperature water into the liners 48, 58, and simultaneously therewith, the opening/closing valve 55 is closed to encapsulate the low-temperature water within the liners 48, 58, to start annealing. When the detected temperatures of the temperature sensors 65, 66 have reached a liner temperature, i.e., a thermal deformation temperature $T_L$ or lower which is a starting point of mold opening, mold opening is conducted to take out a molded article from the mold, followed by starting encapsulation of low-temperature water; and after a lapse of a specified time (specified by an intermediate-temperature medium changeover timer S2), the opening/closing valves 53, 57 are opened to change over to supply intermediate-temperature water to thereby discharge the low-temperature heat media from the liners 48, 58 and supply and discharge pipings; and at the timing where the low-temperature water is substantially collected, the opening/closing valve 54 is opened and the opening/closing valve 55 is closed to continue supplying intermediate-temperature water, thereby raising the temperatures of the liners 48, 58 toward a liner temperature $T_H$ for starting the next filling and molding cycle.

In this way, injection of a molten resin is conducted when the temperatures of the liners 48, 58 are slightly lower than the glass transition point Tg of the resin for a molded article in a manner to simultaneously encapsulate a heat medium within the liners to shift into the dwelling process such that the liners keep temperatures slightly higher than the glass transition point of the resin by virtue of heat radiation from the resin, thereby enabling to prepare an optimum temperature condition for transferring a pattern of fine concavities and convexities onto the molded article (and also enabling to avoid irregularity of temperature of the liners); and in the cooling process, low-temperature media are supplied to the liners to cool them, and in the course of cooling, the low-temperature heat media are encapsulated within the liners to cause cooling to be gradually progressed such that the mold is opened to take out a molded article therefrom at a temperature (50 to 60°C) which is lower than the thermal deformation temperature of the molded article, resulting in decreased thermal energy loss of intermediate-temperature heat medium and low-temperature heat medium for a resin such as a COP (cyclo-olefin polymer) resin having Tg which is as low as 100°C.

The liners 48, 58 are configured to be attached to the mold masters 4, 5 acting as the mold-halves with the thermal insulation plates 38, 39 interposed therebetween, respectively, and the liners 48, 58 have multiple heat medium passages 48a, 58a formed therethrough in a manner slightly separated from the cavity surfaces of the liners 48, 58 such that the liners are made of metal (stainless steel having a thermal conductivity of 20 to 40 W/(m·K)) which appears to have a lower thermal conductivity, resulting in that heat from the hot molten resin is conducted and spread over the whole liners 48, 58 without irregularity in a manner without absorption of the heat directly by heat media flowing through the heat medium passages 48a, 58a and without conduction of the heat from the liners 48, 58 to the mold masters 4, 5, to thereby raise the temperatures of the liners 48, 58 to proper values slightly higher than the glass transition point, thereby enabling to easily transfer patterns engraved on the liners 48, 58, respectively, onto a molded article.

With reference to FIG. 11, the liner made of stainless steel having a thermal conductivity of 20 to 40 W/(m·K) is previously raised in temperature up to $T_H$ ($T_H$=Tg-5°C to Tg-10°C), such that the thick line T1 represents a state immediately after injection filling where the temperature of the liner is raised to $T_s$ while exceeding Tg, and the thick line T1' in FIG. 11(b) represents a state one to two seconds after injection filling where the temperature of the liner is still kept at Tg, so that the fine pattern formed on the cavity surface of the liner is allowed to be transferred with an excellent precision. In turn, in case of a liner made of carbon steel having a thermal conductivity of 40 to 50 W/(m·K), although the liner is raised in temperature up to the vicinity of Tg by virtue of a molten resin immediately after injection filling as represented by a thin line T2, heat provided from the molten resin is immediately absorbed by the liner to suddenly lower the temperature of the cavity surface such that the temperature T2' of the cavity surface is lowered down to the vicinity of $T_H$ in one to two seconds after injection in a manner to deviate from a transference range with excellent precision, thereby failing to transfer a fine pattern formed on the cavity surface of the liner with an excellent precision.

It should be noted that the components constituting the gate of the hot runner 14 include the gate bush pins 68 as described above. The gate bush pins 68 are attached to the fixed side liner 48, to position the nozzles of the hot runner 14, and to constitute gates acting as introduction passages of resin, combinedly with the nozzles of the hot runner 14, respectively.

Although it is possible to advantageously improve a yield of resin and to omit a post working process by providing valve gates of nozzles contactedly with a cavity surface to eliminate sprues and the like to be otherwise left on a molded article, it is then required that direct gates 14a with valve gates having valve functions for nozzles of the hot runner 14 are provided closely to the cavity so as to avoid occurrence of sprues, such that gate bush pins associated with the direct gates 14a with valve gates are to be larger in diameter than the gate bush pin 68 shown in FIG. 5 from a structural reason.

As such, in the case of adopting gate bush pins having larger diameters correspondingly to direct gates with valve gates for the liner 48 including the heat medium passages 48a having the narrow pitch, the passages and the gate bush pins interfere with one another, thereby bringing about a problem as to how gate bush pins having larger diameters are used without deteriorating the functions of the heat medium passages 48a for uniformalizing the temperature distribution of the liner 48.

There will be thus explained embodiments of improved gate bush pins corresponding to the direct gates 14a with valve gates utilizable in the present invention, with reference to FIG. 13 through FIG. 18.

Although the gate bush pins corresponding to the direct gates with valve gates and heat medium passages 48a interfere with one another in a manner that the gate bush pins become obstructive to the heat medium passages when the gate bush pins are adopted for the liner 48 as described above, the improved gate bush pins of the embodiments to be described hereinafter exhibit such common effects that: the yield ratio of resin is advantageously improved, and the post working process can be advantageously omitted; and additionally, roundabout passages for heat medium passages 48a are provided to mitigate the effect on the heat medium passages 48a of the liner, i.e., to avoid increase of conduit resistances of the heat medium passages 48a due to the gate bush pins, in a manner to decrease deviations of flow rates in heat medium passages 48a, thereby effectively keeping the temperature uniformity of the liner 48.

FIG. 13 shows a first embodiment of an improved gate bush pin, in which FIG. 13(a) is a top view of the gate bush pin in case of adoption of a hot runner having a direct gate with valve gate, and FIG. 13 (b) is a view in an E-E arrow direction of FIG. 13(a).

This embodiment includes a gate bush pin 168 for molten resin, and the gate bush pin 168 has a side surface formed with a groove 168a concentrically with a central axis X of the gate bush pin correspondingly to a position or level where the heat medium passages 48a of the liner 48 interfere with the gate bush pin, thereby defining a heat medium roundabout passage 101 extending round about the gate bush pin 168.

For the gate bush pin 168 having a diameter which is one or more times the pitch of the heat medium passages 48a of the liner 48, the groove 168a is formed on the side surface of the gate bush pin 168 near the position corresponding to the heat medium passages 48a of the liner 48 in a thickness direction, such that the groove 168a has a cross-sectional area which is one or more times that of each heat medium passage 48a.

Namely, the heat medium passages 48a for temperature adjustment are provided in the liner 48 in the substantially parallel manner with the narrow pitch, and the gate bush pin 168 is placed in a configuration to penetrate the liner 48. The gate bush pin 168 has the side surface formed with the groove 168a concentrically with the central axis X of the gate bush pin 168 and near a position where the heat medium passages 48a of the liner 48 interfere with the gate bush pin 168, so that the groove 168a defines the heat medium roundabout passage 101 when the gate bush pin 168 is placed in the liner 48.

In the case of the gate bush pin 168 of this embodiment, heat media flowed from heat medium passages 48a upstream of the gate bush pin 168 flow into the heat medium roundabout passage 101 at the position interfering with the gate bush pin 168, thereby flowing round about the gate bush pin 168. The heat medium roundabout passage 101 has a downstream portion connected to heat medium passages 48a positioned downstream of the gate bush pin 168, so that the heat media are flowed out of the roundabout passage and distributed into the heat medium passages. This allows to mitigate deviations of flow rates of heat media due to the gate bush pin 168, thereby enabling to keep the uniformity of temperature distribution of the liner.

Further, in addition to the above-mentioned common effects, the groove 168a is configured to have a larger area interfacing with or occupying on the gate bush pin 168, thereby enabling to enhance the temperature adjustment effect for the gate bush pin 168 and to assemble the gate bush pin 168 with a free rotational orientation, thereby effectively allowing to provide the gate bush pin without considering the positional relationship thereof to the heat medium passages.

FIG. 14 shows a second embodiment of an improved gate bush pin, in which FIG. 14(a) is a top view of the gate bush pin, and FIG. 14(b) is a view in an F-F arrow direction of FIG. 14(a).

This embodiment includes a gate bush pin 268 for molten resin, and the liner 48 has a liner hole 248 which penetrates through the liner and into which the gate bush pin 268 fits, in a manner that the liner hole 248 has an inside surface formed with a groove 248a concentrically with a central axis X of the gate bush pin 268 correspondingly to a position or level where the heat medium passages 48a of the liner 48 interfere with the gate bush pin 268, thereby defining a heat medium roundabout passage 102 extending round about the gate bush pin 268.

For the gate bush pin 268 having a diameter which is one or more times the pitch of the heat medium passages 48a of the liner 48, the groove 248a is formed on the inside surface of the liner hole 248 penetrating through the liner 48 near the position corresponding to the heat medium passages 48a of the liner 48 in a thickness direction, such that the groove 248a has a cross-sectional area which is one or more times that of each heat medium passage 48a.

Namely, the heat medium passages 48a for temperature adjustment are provided in the liner 48 in the substantially parallel manner with the narrow pitch, and the gate bush pin 268 is placed in a configuration to penetrate the liner 48. The liner hole 248 of the liner 48, in which the gate bush pin 268 fits, has the inside surface formed with the groove 248a concentrically with the central axis X of the gate bush pin 268 and near a position where the heat medium passages 48a of the liner 48 interfere with the gate bush pin 268, so that the groove 248a defines the heat medium roundabout passage 102 when the gate bush pin 268 is placed in the liner 48.

In the case of the gate bush pin 268 of this embodiment, heat media flowed from heat medium passages 48a upstream of the gate bush pin flow into the heat medium roundabout passage 102 at the position interfering with the gate bush pin 268, thereby flowing round about the gate bush pin 268. The heat medium roundabout passage 102 has a downstream portion connected to heat medium passages 48a positioned downstream of the gate bush pin 268, so that the heat media are flowed out of the roundabout passage and distributed into the heat medium passages. This allows to mitigate deviations of flow rates of heat media due to the gate bush pin 268, thereby enabling to keep the uniformity of temperature distribution of the liner 48.

Further, in addition to the above-mentioned common effects, the gate bush pin 268 can be decreased in diameter, while enabling to assemble the gate bush pin 268 with a free rotational orientation, thereby effectively allowing to provide the gate bush pin 268 without considering the positional relationship thereof to the heat medium passages 48a.

FIG. 15 shows a third embodiment of an improved gate bush pin, in which FIG. 15(a) is a top view of the gate bush pin, and FIG. 15(b) is a view in a G-G arrow direction of FIG. 15(a).

This embodiment includes a gate bush pin 368 for molten resin, and the liner 48 has a liner hole 348 which penetrates through the liner and into which the gate bush pin 368 fits, in a manner that the gate bush pin 368 has a side surface formed with a groove 368a concentrically with a central axis X of the gate bush pin 368 and the liner hole 348 has an inside surface formed with a groove 348a also concentrically with the central axis X, both correspondingly to a position or level where the heat medium passages 48a of the liner 48 interfere with the gate bush pin 368, such that the groove 368a of the gate bush pin 368 and the groove 348a of the liner hole 348 cooperatively define a heat medium roundabout passage 103 extending round about the gate bush pin 368 when the gate bush pin 368 is fitted into the liner hole 348.

For the gate bush pin 368 having a diameter which is one or more times the pitch of the heat medium passages 48a of the liner 48, the grooves 368a, 348a are formed on the side surface of the gate bush pin 368 and on the inside surface of the liner hole 348 penetrating through the liner 48, respectively, near the position corresponding to the heat medium passages 48a of the liner 48 in a thickness direction, such that the grooves cooperatively have a cross-sectional area which is one or more times that of each heat medium passage 48a.

Namely, the heat medium passages 48a for temperature adjustment are provided in the liner 48 in the substantially parallel manner with the narrow pitch, and the gate bush pin 368 is placed in a configuration to penetrate the liner 48. The gate bush pin 368 has the side surface formed with the groove 368a concentrically with the central axis X of the gate bush pin 368 and the liner hole 348 has the inside surface formed with the groove 348a, both correspondingly to the position or level where the heat medium passages 48a of the liner 48 interfere with the gate bush pin 368 and near a position where the heat medium passages 48a of the liner 48 interfere with the gate bush pin 368, so that the groove 368a of the gate bush pin 368 and the groove 348a of the liner hole 348 cooperatively define the heat medium roundabout passage 103 extending round about the gate bush pin 368 when the gate bush pin 368 is placed in the liner 48.

In the case of the gate bush pin 368 of this embodiment, heat media flowed from heat medium passages 48a upstream of the gate bush pin flow into the heat medium roundabout passage 103 at the position interfering with the gate bush pin 368, thereby flowing round about the gate bush pin 368. The heat medium roundabout passage 103 has a downstream portion connected to heat medium passages 48a positioned downstream of the gate bush pin 368, so that the heat media are flowed out of the roundabout passage and distributed into the heat medium passages. This allows to mitigate deviations of flow rates of heat media due to the gate bush pin 368, thereby enabling to keep the uniformity of temperature distribution of the liner 48.

Further, in addition to the above-mentioned common effects, the heat medium roundabout passage 103 is allowed to have an increased cross-sectional area to decrease a round about resistance, thereby enabling to improve the temperature uniformity of the liner 48 and to assemble the gate bush pin with a free rotational orientation, thereby effectively allowing to provide the gate bush pin 368 without considering the positional relationship thereof to the heat medium passages 48a.

FIG. 16 shows a fourth embodiment of an improved gate bush pin, in which FIG. 16(a) is a top view of the gate bush pin, and FIG. 16(b) is a view in an H-H arrow direction of FIG. 16(a).

This embodiment includes a gate bush pin 468 for molten resin, and the liner 48 has a liner hole 448 which penetrates through the liner and into which the gate bush pin 468 fits, in a manner that the gate bush pin 468 has a side surface with large outer diameter and small outer diameter portions to form a stepped portion 468a therebetween and the liner hole 448 also has an inside surface with large inner diameter and small inner diameter portions to form a stepped portion 448a therebetween, both correspondingly to a position or level where the heat medium passages 48a of the liner 48 interfere with the gate bush pin, such that the stepped portions 468a, 448a of the gate bush pin 468 and liner hole 448 cooperatively define a space extending around the pin by virtue of the positional difference therebetween, and the space defines a heat medium roundabout passage 104 extending round about the gate bush pin 468 when the gate bush pin 468 is fitted into the liner hole 448.

For the gate bush pin 468 having a diameter which is one or more times the pitch "p" of the heat medium passages 48a of the liner 48, the space around the gate bush pin 468 cooperatively defined by the stepped portion 468a of the gate bush pin 468 and the stepped portion 448a of the liner hole 448 establishes the heat medium roundabout passage 104 near the position corresponding to the heat medium passages 48a of the liner 48 in a thickness "t" direction, such that the space has a cross-sectional area which is one or more times that of each heat medium passage 48a.

Namely, the heat medium passages 48a for temperature adjustment are provided in the liner 48 in the substantially parallel manner with the narrow pitch, and the gate bush pin 468 is placed in a configuration to penetrate the liner 48. The gate bush pin 468 has the side surface with large outer diameter and small outer diameter portions to form the stepped portion 468a therebetween correspondingly to the position or level where the heat medium passages 48a of the liner 48 interfere with the gate bush pin 468. Further, the liner hole 448 also has the inside surface with large inner diameter and small inner diameter portions to form the stepped portion 448a therebetween, correspondingly to the position or level where the heat medium passages 48a of the liner 48 interfere with the gate bush pin, thereby defining the heat medium roundabout passage 104 when the gate bush pin 468 is placed in the liner 48.

In the case of the gate bush pin 468 of this embodiment, heat media flowed from heat medium passages 48a upstream of the gate bush pin 468 flow into the heat medium roundabout passage 104 at the position interfering with the gate bush pin 468, thereby flowing round about the gate bush pin 468. The heat medium roundabout passage 104 has a downstream portion connected to heat medium passages 48a positioned downstream of the gate bush pin 468, so that the heat media are flowed out of the roundabout passage and distributed into the heat medium passages. This allows to mitigate deviations of flow rates of heat media due to the gate bush pin 468, thereby enabling to keep the uniformity of temperature distribution of the liner 48.

Further, in addition to the above-mentioned common effects, the heat medium roundabout passage 104 is allowed to have an increased cross-sectional area to decrease a round about resistance, thereby enabling to improve the temperature uniformity of the liner 48. Moreover, fabrication of the heat medium roundabout passage 104 is facilitated while allowing to assemble the gate bush pin with a free rotational orientation, thereby effectively allowing to provide the gate bush pin without considering the positional relationship thereof to the heat medium passages. This embodiment also has an advantage of facilitated fabrication.

FIG. 17 shows a fifth embodiment of an improved gate bush pin, in which FIG. 17(a) is a top view of the gate bush pin, and FIG. 17(b) is a view in an I-I arrow direction of FIG. 17(a).

This embodiment includes a gate bush pin 568 for molten resin, and the heat medium passages 48a penetrating through the liner 48 are provided with transverse heat medium passages 505 near upstream and downstream sides of the gate bush pin 568, respectively, correspondingly to a position or level where the heat medium passages 48a of the liner 48 interfere with the gate bush pin 568, such that the passages 505 transversely communicates the heat medium passages 48a with one another, respectively.

Namely, the heat medium passages 48a for temperature adjustment are provided in the liner 48 in the substantially parallel manner with the narrow pitch, and the gate bush pin 568 is placed in a configuration to penetrate the liner 48. The gate bush pin 568 has the side surface formed with the groove 568a concentrically with a central axis X of the gate bush pin 568 and near a position where the heat medium passages 48a of the liner 48 interfere with the gate bush pin 568, so that the groove 568a defines the heat medium roundabout passage 105 between the groove itself and the inner peripheral surface of the liner hole 548 when the gate bush pin 568 is placed in the liner 48.

Further, the transverse heat medium passages 505 are provided near the upstream side and downstream side of the gate bush pin 568 in a manner to extend substantially perpendicularly to the heat medium passages 48a and penetrate the liner 48 to thereby transversely communicate the heat medium passages 48a with one another. The heat media flowed from the heat medium passages 48a upstream of the gate bush pin 568 flow into the upstream side transverse heat medium passage 505 upstream of a position where the heat medium passages interfere with the gate bush pin 568, the media then flow round about the gate bush pin 568, and the media flow into the downstream side transverse heat medium passage 505 downstream of the gate bush pin and are distributed into the heat medium passages 48a.

In the case of the gate bush pin 568 of this embodiment, heat media flowed from heat medium passages 48a upstream of the gate bush pin 568 flow into the heat medium roundabout passage 105 at the position interfering with the gate bush pin 568, thereby flowing round about the gate bush pin 568. The heat medium roundabout passage 105 has a downstream portion connected to heat medium passages positioned downstream of the gate bush pin, so that the heat media are flowed out of the roundabout passage and distributed into the heat medium passages.

Further, the transverse heat medium passages 505 upstream and downstream of the gate bush pin 568 serve to distribute and converge the heat media in a manner to assist the function of the heat medium roundabout passage 105. This allows to mitigate deviations of flow rates of heat media due to the gate bush pin 568, thereby enabling to keep the uniformity of temperature distribution of the liner 48.

Further, in addition to the above-mentioned common effects, the heat medium roundabout passage is allowed to have an increased cross-sectional area to decrease a round about resistance, thereby enabling to improve the temperature uniformity of the liner 48. Moreover, fabrication of the heat medium roundabout passage is facilitated while effectively allowing to assemble the gate bush pin with a free rotational orientation, thereby effectively allowing to provide the gate bush pin without considering the positional relationship thereof to the heat medium passages.

It should be noted that although this embodiment has been described by adopting the gate bush pin 568 and heat medium roundabout passage 105 which are the same as the gate bush pin 168 and heat medium roundabout passage 101 of the first embodiment, the feature of this embodiment resides in that the transverse heat medium passages 505 are provided near upstream side and downstream side of the gate bush pin in a manner to traverse the heat medium passages 48a, so that it is also possible to adopt any ones of the gate bush pin, heat medium roundabout passages, and the like of the first embodiment through fourth embodiment.

FIG. 18 shows a sixth embodiment of an improved gate bush pin, in which FIG. 18(a) is a top view of the gate bush pin, FIG. 18(b) is a cross-sectional view in a J-J arrow direction of FIG. 18(a), and FIG. 18(c) is a cross-sectional view in a K-K arrow direction of FIG. 18(a).

This embodiment includes a gate bush pin 668 for molten resin, the gate bush pin 668 has a side surface formed with grooves 668a which grooves are located to oppose each other in the direction of heat medium passage 48a about a central axis X of the gate bush pin and which grooves are oriented in a direction substantially perpendicular to the heat medium passages 48a, and the gate bush pin 668 is formed with heat medium communication passages 668b penetrating the gate bush pin 668 substantially perpendicularly to the opposed grooves 668a to thereby communicate the grooves 668a with each other, respectively, thereby defining a heat medium roundabout passage 106 extending substantially round about the gate bush pin 668.

Namely, the heat medium passages 48a for temperature adjustment are provided in the liner 48 in the substantially parallel manner with the narrow pitch, and the gate bush pin 668 is placed in a configuration to penetrate the liner 48. The gate bush pin 668 has upstream and downstream side surfaces formed with the grooves 668a opposed to each other in the direction of heat medium passages 48a and substantially perpendicular to heat medium passages 48a, such that the grooves 668a define manifolds at upstream and downstream sides of the gate bush pin 668, respectively, which manifolds attain convergence and distribution of heat media between the grooves and the inner peripheral surface of the liner hole 648, respectively. Further, the heat medium communication passages 668b penetrating the gate bush pin 668 are provided substantially perpendicularly to the opposing grooves 668a to thereby communicate with each other, thereby defining the heat medium roundabout passage 106 with the groove 668a when the gate bush pin 668 is placed in the liner 48.

In the case of the gate bush pin 668 of this embodiment, heat media flowed from heat medium passages 48a upstream of the gate bush pin 668 flow into the heat medium roundabout passage 106 comprising: the grooves 668a opposed to each other in the direction of heat medium passages 48a and substantially perpendicular to heat medium passages 48a; and the heat medium communication passages 668b penetrating the gate bush pin 668 substantially perpendicularly to the groove 668a to thereby communicate the opposed grooves 668a with each other, respectively; at the position interfering with the gate bush pin 668, thereby flowing substantially round about the gate bush pin 668. The heat medium roundabout passage 106 has a downstream portion connected to heat medium passages 48a positioned downstream of the gate bush pin 668, so that the heat media are flowed out of the roundabout passage and distributed into the heat medium passages. This allows to mitigate deviations of flow rates of heat media due to the gate bush pin, thereby enabling to keep the uniformity of temperature distribution of the liner. Further, in addition to the above-mentioned common effects, it becomes possible to ensure wider spaces acting as the manifolds at the gate bush pin, thereby enabling to effectively improve the flow rate distribution.

The present invention will be further described in detail with reference to Examples, without being limited thereto.

(Exemplary Configuration #1)

An article was molded by a mold for injection molding, having the liners shown in FIG. 1 and FIG. 3. The molded article was a planar diffusion plate in a shape of 264 mmx350 mm (diagonal dimension of 17.26 inches) with a thickness of 2 mm.

Used as the liners of the mold were anticorrosive stainless steel HPM38 (thermal conductivity: 25.1 W/(m·K)) for mirror surface finishing manufactured by Hitachi Metals Ltd.

The mold liners each had a thickness "t" of 16mm, and the liners were each uniformly formed therein with heat medium passages having an inner diameter of 6 mm with a pitch of 10 mm. The heat medium passages had centers separated from the cavity surface of each liner by a distance "c" of 9.5 mm, so that c/t was about 0.59. Further used were thermal insulation plates (thermal conductivity: 0.21 W/(m·K)) each having a thickness of 3mm, between the liners and associated mold masters, respectively.

The fixed side liner had a surface formed with a prism pattern having an apex angle of 90°, for light diffusion.

There was used an injection molding machine having a mold clamping force of 350tonf. Further used were an intermediate-temperature medium supply apparatus, a low-temperature medium supply apparatus, and an intermediate-temperature medium/low-temperature medium changeover apparatus.

The intermediate-temperature medium supply apparatus was arbitrarily set at a specified temperature between 95°C and 110°C depending on a test condition, and the low-temperature medium supply apparatus was set at 30°C.

Temperatures of the movable side liner and fixed side liner were measured by thermocouples incorporated in the liners, respectively.

Adopted as a resin material was a COP (cyclo-olefin polymer: ZEONOR (Trademark) 1060R by ZEON Corporation, having a glass transition point of 100°C), to perform molding of the diffusion plate.

The exemplary configuration #1 was conducted for comparison of qualities of molded articles and molding cycles, depending on liner temperatures.

The fixed side liner and movable side liner were supplied with an intermediate-temperature medium such that the intermediate-temperature medium was caused to by-pass a temperature adjustment circuit and was encapsulated within the liners when the temperatures of the liners had reached 95°C, and injection of a resin was then started. At this time, the injection molding machine was set at 280°C in its cylinder temperature. Completion of injection resulted in changeover to a low-temperature medium at the time of changeover to a dwelling process, to start cooling of a molded article. Cooling was conducted for 22 seconds, and then the molded article was taken out.

At this time, it was confirmed by the thermocouples incorporated in the liners that the liner temperatures after filling of the resin were raised to 108°C at the highest by heat input from the resin.

The thus obtained article exhibited an excellent appearance, free of warpage and shrinkage. The molding cycle was 58 seconds in this case. Further, the molded article was measured for its prism pattern on its surface by a Super Depth Surface Profile Measurement Microscope VK-8550 manufactured by KEYENCE Corporation, and exhibited a transference ratio of 90% or more over the whole surface of the molded article. Note that the transference ratio was a ratio of a height of the transferred pattern to a height of the pattern formed on the applicable mold:

[transference ratio (%)]=[height of pattern of molded article]/[height of pattern on mold]×100

Molding was conducted under the above conditions, and Table 1 shows results with variously changed liner materials, and liner temperatures upon injection.

There was conducted molding by heating the liners to a temperature of 86°C as Comparative Example 1, showing that variances were frequently caused such that transferabilitis of molded article surfaces were 70% to 99%.

When injection was conducted at a liner temperature of 100°C, the liner temperature was raised to 109°C at the highest after filling of a resin. The molded article in this case exhibited an excellent transference ratio of 90% or higher (Example 2).

In turn, when injection was conducted at a liner temperature of 105°C, the liner temperature was raised to 111°C at the highest and the transference ratio was also excellently 90% or higher, but there was confirmed a (slippage) situation that the pattern was slipped and shifted along and on a surface of a molded article (Comparative Example 2).

This appears to be caused such that formation of a skin layer was insufficient due to the higher temperature of the mold after injection of resin, so that the once formed pattern was slipped by an influence of a shearing force from the resin flowed in rapid succession.

Further, in the Examples, the temperature of the liners upon injection was set at the glass transition point or lower, thereby enabling a decreased variation amplitude of the liner temperature upon heating and cooling as compared to a situation of the liner temperature higher than the glass transition point, thereby exhibiting effects that energies required for heating and cooling the liners of the mold can be decreased, and the molding cycle can be shortened.

[Table 1]

| <Comparative Examples 1, 2, Examples 1, 2> | | | | | | | |
|---|---|---|---|---|---|---|---|
| | Liner Material | Liner temptperature | Cooling start timing | Cooling time | Transference ratio | Slip-page | Molding cycle |
| Com. Ex. 1 | HPM38 | 86°C | Upon completion of injection | 22 sec | 70 to 99% | No | 58 sec |
| Ex. 1 | HPM38 | 95°C | Upon completion of injection | 22 sec | 90% or more | No | 58 sec |
| Ex. 2 | HPM38 | 100°C | Upon completion of injection | 22 sec | 90% or more | No | 60 sec |
| Com. Ex. 2 | HPM38 | 105°C | Upon completion of injection | 22 sec | 90% or more | Yes | 62 sec |

(Exemplary Configuration #2)

This exemplary configuration was a test for setting a liner temperature at 95°C and adopting a liner material having a different thermal conductivity. Thus, there will be explained effects of the present invention upon adoption of: NAK80 (thermal conductivity: 39.3 W/ (m·K)) manufactured by Daido Steel Co., Ltd., which is a deposition hardening type of steel for plastic-oriented mold; and S50C (thermal conductivity: 50.5 W/(m·K)) manufactured by Kobe Steel Ltd., which is high carbon steel for plastic-oriented mold; in addition to HPM38.

The liner temperature upon injection was kept constant at 95°C, and molding tests were performed for respective materials, thereby evaluating transferabilities of obtained molded articles. Excellent molded articles were obtained in case of NAK80 having a thermal conductivity higher than that of HPM38. The highest temperature of the liner was 106°C.

Next, injection was conducted while changing the mold liner material to S50C and adopting the same liner temperature of 95°C, resulting in elevation up to 104°C as the highest temperature, but the obtained molded article partly exhibited a transferability as low as 85%. The result is shown in Table 2.

[Table 2]

| <Comparative Example 3, Examples 1, 3 > | | | | | | | |
|---|---|---|---|---|---|---|---|
| | Liner Material | Liner Temperature | Cooling start timing | Cooling time | Transference ratio | Slip-page | Molding cycle |
| Com. Ex. 3 | S50C | 95°C | Upon completion of injection | 22 sec | 85 to 99% | No | 57 sec |
| Ex. 1 | HPM38 | 95°C | Upon completion of injection | 22 sec | 90% or more | No | 58 sec |
| Ex. 3 | NAK80 | 95°C | Upon completion of injection | 22 sec | 90% or more | No | 58 sec |

From the above Examples, it has been recognized that in the case of lower thermal conductivities of liners, heat coming from a resin effectively acts to raise the temperature of the liner surface, while in the case of higher thermal conductivities of liners, heat coming from a resin is absorbed by a liner and conducted in a depth-wise direction of the liner to exhibit an insufficient function of temperature elevation of the liner surface and thus to adversely affect on the transference ratio of the molded article; and selection of mold steel materials having an appropriate thermal conductivities allows to simultaneously establish energy-saving and higher transferability by virtue of decreased variation amplitudes of mold temperatures.

(Exemplary Configuration #3)

This exemplary configuration is provided for explaining effects of the present invention concerning: a distance ""c" from a liner surface to a center of a heat medium passage; a distance (pitch) "p" between neighboring heat medium passages; and a thickness "t" of a mold liner. Table 3 shows a result of non-stationary heat transfer analysis where the initial temperature of liner was set at 80°C, and the temperature of intermediate-temperature medium was set at 110°C.
As seen from Table 3, when heat medium passages are arranged at centers of thicknesses of liners such as in case of Comparative Example 5 and Comparative Example 7, temperature differences of 2.5°C or more appear on liner surfaces in the heating process of liners to thereby deteriorate uniformity of surface temperatures, so that molded articles are caused to have molding defects such as shrinkage due to such temperature differences.
Further, concerning a distance "c" from a liner surface to a center of heat medium passage and a distance "p" between neighboring heat medium passages, it appears that ratios p/c of 1.11 or less as in Examples 1, 3, and 4 lead to maximum temperature differences of 1.0°C or less for liner surfaces, whereas larger ratios p/c in all Comparative Examples 5 through 8 lead to maximum temperature differences of 2.5°C or more for liner surfaces to adversely affect uniformity of surface temperatures.
From the result, it has been recognized that it is favorable to establish c/t of 0.58 or more, preferably 0.59 or more, and p/c of 1.1 or less, preferably 1.05 or less, for the distance "c" from a liner surface to a center of heat medium passage, the distance (pitch) "p" between neighboring heat medium passages, and the "t" of liner, in order to eliminate affection of liner surface temperature on a molded article quality while decreasing the thickness of the liner as thin as possible to thereby decrease a heat capacity thereof.

[Table 3]

| <Examples 1, 3, 4, Comparative Examples 4, 5, 6, 7, 8> | | | | | | | | |
|---|---|---|---|---|---|---|---|---|
| | Liner Material | t*1 | c*2 | p*3 | c/t | p/c | Maximum surface temperature difference | Evaluation |
| Ex. 1 | HPM38 | 16.0 mm | 9.5 mm | 10.0 mm | 0.59 | 1.05 | 0.9°C | Desirable |

(continued)

| <Examples 1, 3, 4, Comparative Examples 4, 5, 6, 7, 8> | | | | | | | | |
|---|---|---|---|---|---|---|---|---|
| | Liner Material | t*1 | c*2 | p*3 | c/t | p/c | Maximum surface temperature difference | Evaluation |
| Com. Ex. 4 | HPM38 | 15.5 mm | 9.0 mm | 10.0 mm | 0.58 | 1.11 | 1.3°C | Ordinary |
| Com. Ex. 5 | HPM38 | 15.5 mm | 7.7 5 mm | 10.0 mm | 0.5 | 1.29 | 2.9°C | Undesirable |
| Com. Ex. 6 | HPM38 | 16.0 mm | 9.5 mm | 15.0 mm | 0.59 | 1.58 | 4.9°C | Undesirable |
| Ex. 3 | NAK80 | 16.0 mm | 9.5 mm | 10.0 mm | 0.59 | 1.05 | 0.7°C | Desirable |
| Ex. 4 | NAK80 | 15.5 mm | 9.0 mm | 10.0 mm | 0.58 | 1.11 | 1.0°C | Desirable |
| Com. Ex. 7 | NAK80 | 15.5 mm | 7.7 5 mm | 10.0 mm | 0.5 | 1.29 | 2.5°C | Undesirable |
| Com. Ex. 8 | NAK80 | 16.0 mm | 9.5 mm | 15.0 mm | 0.59 | 1.58 | 4.1°C | Undesirable |
| *1: thickness of liner<br>*2: distance from liner surface to center of heat medium passage<br>*3: distance between neighboring heat medium passages | | | | | | | | |

(Exemplary Configuration #4)

There will be explained an effect of the present invention on a start timing of cooling, based on Table 4.

In Example 1, start timing of cooling of liners was set at the start timing of dwelling. The start point of dwelling was selected to be a point where 90% or more of resin was filled in the cavity relative to the volume thereof. As a result, the obtained molded article exhibited a pattern transference ratio of 90% or more.

Next, there was obtained a molded article having a transference ratio of 90% or more, also in a case where the start timing of cooling was upon completion of dwelling. However, since the start timing of cooling was delayed from the Example 1, the molding cycle was 63 seconds or longer.

Comparative Example 4 is a situation where the start timing of cooling was simultaneous with start of injection. In this case, cooling is started at part of the mold before the cavity is filled with resin in its entirety, thereby bringing about variances in pattern transference ratios of 70 to 99%.

[Table 4]

| <Examples 1, 5, Comparative Example 4> | | | | | | | |
|---|---|---|---|---|---|---|---|
| | Liner Material | Liner Temperature | Cooling start timing | Cooling time | Transference ratio | Slip-page | Molding cycle |
| Ex. 1 | HPM38 | 95°C | Upon completion of injection | 22 sec | 90% or more | No | 58 sec |
| Ex. 5 | HPM38 | 95°C | Upon completion of dwelling | 22 sec | 92% or more | No | 63 sec or more |
| Com. Ex. 4 | HPM38 | 95°C | Upon start of injection | 22 sec | 70 to 99% | No | 57 sec |

It should be noted that there was conducted the same molding method by fabricating molds having the same structure as the above but with proportionally increased sizes for diffusion plates having diagonal dimensions of 32 inches and 45 inches as molded articles, respectively, resulting in obtainment of molded articles having transference ratios of 90% or more by substantially the same cycles.

## Claims

1. A mold (4, 5) comprising:

a fixed side mold-half configured with a fixed side mold master (4) and a movable side mold-half configured with a movable side mold master (5);
a fixed side liner (48) attached to the fixed side mold master (4) and a movable side liner (58) attached to the movable side mold master (5), the fixed side liner (48) and movable side liner (58) having open sides forming cavity surfaces, respectively, the fixed side liner (48) and movable side liner (58) having multiple heat medium passages (48a) formed therethrough in positions at constant distances from the cavity surfaces, respectively;
**characterized in that** it further comprises
thermal insulation plates (38, 39) interposed between the liners (48, 58) and the mold masters (4, 5), respectively, the thermal insulation plates (38, 39) each having a thermal conductivity of 5 W/(m·K) or less;
pairs of heat medium manifolds (49) attached to both edges of those surfaces of the liners (48, 58) which are reverse to the cavity surfaces, respectively, in a manner that the heat medium manifolds (49) are communicated with the heat medium passages (48a) of the liners (48, 58), respectively; and
multiple hold members (42, 43) for holding four edges of each of the liners (48, 58) to fix the liners (48, 58) to the mold masters (4, 5), respectively,
**in that** the fixed side liner (48) and movable side liner (58) are in rectangular plate shapes having thicknesses of 15 to 30 mm, and
**in that** the fixed side liner (48) and movable side liner (58) are made of metal having a thermal conductivity of 20 to 40 W/(m·K).

2. The mold (4, 5) of claim 1, wherein the liners (48, 58) are each made of a material comprising stainless steel, and wherein the thermal insulation plates (38, 39) are each made of glass fiber reinforced heat-resistant resin, or ceramics.

3. A mold temperature adjusting apparatus (30) comprising: the mold (4, 5) of claim 1; intermediate-temperature adjustment means (24, 28, 53, 57) for thermally adjusting a temperature of a heat medium to a specified temperature near a glass transition point of a resin for a molded article (50); low-temperature adjustment means (23, 26, 29, 52, 56) for thermally adjusting the heat medium to a specified low-temperature; the mold temperature adjusting apparatus (30) being configured to selectively change over between the heat medium thermally adjusted by the intermediate-temperature adjustment means (24, 28, 53, 57) and the heat medium thermally adjusted by the low-temperature adjustment means (23, 26, 29, 52, 56) in a manner to supply the selected heat medium to the heat medium passages (48a) of the liners (48, 58) to thereby conduct temperature control of the liners (48, 58);
wherein the mold temperature adjusting apparatus (30) further comprises:

a plurality of liner temperature detecting means (65, 66) for detecting the liner temperatures of the fixed side mold-half and movable side mold-half, respectively;
liner temperature setting means (47) for setting an intermediate-temperature heat medium temperature ($T_{HW}$), a low-temperature heat medium temperature ($T_{LW}$), a liner temperature ($T_H$) for starting filling of molten resin into the mold (4, 5), a liner temperature ($T_M$) for stopping supply of the low-temperature heat medium and starting encapsulation of the low-temperature heat medium, and a liner temperature ($T_L$) for finishing cooling of the filled resin and starting mold opening;
liner temperature controlling means for controlling liner temperatures to specified temperatures, respectively;
a timer ($S_H$) for setting a dwelling limitation time;
a timer (S1) for setting a period of time from starting the dwelling until heat medium outlets (33, 35a) are opened to supply the low-temperature heat medium into the liners (48, 58);
a timer (S2) for setting a period of time from encapsulation of the low-temperature heat medium within the liners (48, 58) until the encapsulation is terminated and the intermediate-temperature heat medium is started to be supplied; and
display means (46) capable of displaying the specified values in relation to a liner temperature curve for a molding process on a screen, and capable of switching the screen to display actually measured values of temperatures of the liners (48, 58) in an actual molding process, simultaneously with the specified values or by the actually measured values themselves.

4. An injection molding method adopting the mold temperature adjusting apparatus (30) of claim 3, for heating the liners (48, 58) of the mold (4, 5) before filling the molten resin and for cooling the liners (48, 58) after filling the molten resin, the method comprising the steps of:

supplying an intermediate-temperature heat medium to the liners (48, 58), which medium is at substantially the same temperature as Tg where Tg is a glass transition point of the resin;
stopping supply of the intermediate-temperature heat medium at the time when the liner temperature has reached a temperature $T_H$=Tg-5°C to Tg-10°C which temperature $T_H$ is a liner temperature for starting a filling process;
closing the heat medium outlets (33, 35a) to encapsulate the intermediate-temperature heat medium within the liners (48, 58), and in this state, starting injection by a molding machine to fill a molten resin into the mold (4, 5);
starting dwelling of the resin, and keeping the liner temperature raised to a temperature $T_S$=Tg to Tg+10°C by virtue of heat of the molten resin;
after a lapse of a specified time from the start of dwelling, opening the heat medium outlets (33, 35a) and supplying a low-temperature heat medium into the liners (48, 58) to progress a cooling process of the liners (48, 58) in a manner to discharge the intermediate-temperature heat medium accumulated within the heat medium passages (48a) in the liners (48, 58) while continuing to supply the low-temperature heat medium;
terminating dwelling of the resin, after a lapse of a dwelling limitation time, or when the mold temperature has reached Tg or lower;
after the liner temperature has reached $T_M$=Tg-5°C to Tg-15°C, stopping supply of the low-temperature heat medium into the liners (48, 58), and simultaneously therewith, closing the heat medium outlets (33, 35a) to encapsulate the low-temperature heat medium within the liners (48, 58) to thereby conduct slow cooling of the liners (48, 58);
when the liner temperature has reached a thermal deformation temperature $T_L$ of a molded article (50) or lower, opening the mold (4, 5) to take out the molded article (50) therefrom; and
subsequently, changing over to the intermediate-temperature heat medium, and opening the heat medium outlets (33, 35a) to discharge the low-temperature heat medium from the liners (48, 58), thereby raising the liner temperature toward the temperature $T_H$ for starting the filling process again.

5. The injection molding method of claim 4, further comprising the steps of:

displaying, on the screen (46) of the display means (47) of the injection molding machine (1), the actually measured mold liner temperature in the molding process according to the injection molding method of claim 4, for each cycle of the injecting process;
adjusting specified values of an intermediate-temperature heat medium temperature ($T_{HW}$), a low-temperature heat medium temperature ($T_{LW}$), a filling star mold liner temperature ($T_H$), a low-temperature heat medium supply stop temperature ($T_M$), and a mold opening start liner temperature ($T_L$), in a manner to optimize the molding condition of a resin by the injection molding machine (1) to thereby attain the shortest molding cycle time; and
monitoring the mold liner temperature during the injecting process.

6. An injection molding machine (1) having the mold temperature adjusting apparatus (30) of claim 3, wherein the injection molding machine (1) comprises a display view for setting an injecting/filling process condition, which display view is displayable on the same screen of the display means (46) of the mold temperature adjusting apparatus (30), interchangeably with the display view of the display means (46) of the mold temperature adjusting apparatus (30).

7. The mold (4, 5) of claim 1 or 2, wherein the cavity surfaces and the heat medium passages (48a) are so arranged that:

$c/t \geq 0.58$, and $p/c \leq 1.1$
where "c" is a distance from each cavity surface to a center of the associated heat medium passage (48a),
"t" is a thickness of each liner (48, 58), and
"p" is a spacing pitch of the heat medium passages (48a).

8. The mold (4, 5) of claim 1, 2, or 7, wherein at positions where the heat medium passages (48a) and the associated manifolds (49) are communicated with one another, the heat medium passages (48a) and the associated manifolds (49) are so arranged that:

$$f \leq 3d$$

where "d" is an inner diameter of each heat medium passage; and
"f" is a depth from a distal edge of a communication hole of the associated manifold to a closed end of the heat medium passage.

9. The mold of claim 1, 2, 7, or 8, wherein the mold further comprises a molten resin gate bush pin (68) penetrating through the associated one (48) of the liners (48, 58); and
wherein the gate bush pin (68) has a side surface formed with a recess (68a) correspondingly to a position where applicable heat medium passages (48a) of the associated liner (48) interfere with the gate bush pin (68), thereby avoiding occurrence of constriction in the heat medium passages (48a).

10. The mold of claim 1, 2, 7, or 8, wherein the mold further comprises a molten resin gate bush pin (168) penetrating through the associated one (48) of the liners (48, 58); and
wherein the gate bush pin (168) has a side surface formed with a groove (168a) concentrically with a central axis (X) of the gate bush pin (168) correspondingly to a position where applicable heat medium passages (48a) of the associated liner (48) interfere with the gate bush pin (168), thereby defining a heat medium roundabout passage (101) extending round about the gate bush pin (168).

11. The mold of claim 1, 2, 7, or 8, wherein the mold further comprises a molten resin gate bush pin (268) penetrating through the associated one (48) of the liners (48, 58); and
wherein the liner (48) has a liner hole (248) which penetrates through the liner (48) and into which the gate bush pin (268) fits, in a manner that the liner hole (248) has an inside surface formed with a groove (248a) concentrically with a central axis (X) of the gate bush pin (268) correspondingly to a position where the heat medium passages (48a) of the liner (48) interfere with the gate bush pin (268), thereby defining a heat medium roundabout passage (102) extending round about the gate bush pin (268).

12. The mold of claim 1, 2, 7, or 8, wherein the mold further comprises a molten resin gate bush pin (368) penetrating through the associated one (48) of the liners (48, 58); and
wherein the liner (48) has a liner hole (348) which penetrates through the liner (48) and into which the gate bush pin (368) fits, in a manner that the gate bush pin (368) has a side surface formed with a groove (368a) concentrically with a central axis (X) of the gate bush pin (368) and the liner hole (348) has an inside surface formed with a groove (348a) also concentrically with the central axis (X), both correspondingly to a position where the heat medium passages (48a) of the liner (48) interfere with the gate bush pin (368), such that the groove (368a) of the gate bush pin (368) and the groove (348a) of the liner hole (348) cooperatively define a heat medium roundabout passage (103) extending round about the gate bush pin (368) when the gate bush pin (368) is fitted into the liner hole (348).

13. The mold of claim 1, 2, 7, or 8, wherein the mold further comprises a molten resin gate bush pin (468) penetrating through the associated one (48) of the liners (48, 58); and
wherein the liner (48) has a liner hole (448) which penetrates through the liner (48) and into which the gate bush pin (468) fits, in a manner that the gate bush pin (468) has a side surface with large outer diameter and small outer diameter portions to form a stepped portion (468a) therebetween and the liner hole (448) also has an inside surface with large inner diameter and small inner diameter portions to form a stepped portion (448a) therebetween, both correspondingly to a position where the heat medium passages (48a) of the liner (48) interfere with the gate bush pin, such that the stepped portions (468a, 448a) of the gate bush pin (468) and liner hole (448) cooperatively define a space extending around the pin (468) by virtue of the positional difference therebetween, and the space defines a heat medium roundabout passage (104) extending round about the gate bush pin (468) when the gate bush pin (468) is fitted into the liner hole (448).

14. The mold of claim 10, 11, 12, or 13, wherein the heat medium passages (48a) penetrating through the liner (48) are provided with transverse heat medium passages (505) near upstream and downstream sides of the gate bush pin (568), respectively, correspondingly to a position or level where the heat medium passages (48a) of the liner (48) interfere with the gate bush pin (568), such that the passages (505) transversely communicates the heat medium passages (48a) with one another, respectively.

15. The mold of claim 1, 2, 7, or 8, wherein the mold further comprises a molten resin gate bush pin (668) penetrating through the associated one (48) of the liners (48, 58); and
wherein the gate bush pin (668) has a side surface formed with grooves (668a) which grooves are located to oppose to each other in the direction of heat medium passage (48a) about a central axis (X) of the gate bush pin (668) and which grooves are oriented in a direction substantially perpendicular to the heat medium passages (48a), and the gate bush pin (668) is formed with heat medium communication passages (668b) penetrating the gate bush pin (668) substantially perpendicularly to the opposed grooves (668a) to thereby communicate the grooves (668a) with each other, respectively, thereby defining a heat medium roundabout passage (106) extending substantially round about the gate bush pin (668).

## Patentansprüche

1. Formwerkzeug (4, 5), umfassend:

eine Formwerkzeughälfte an einer festen Seite, die mit einer Formmatrize (4) an der festen Seite ausgeführt ist, und eine Formwerkzeughälfte an einer beweglichen Seite, die mit einer Formmatrize (5) an der beweglichen Seite ausgeführt ist,
einen Einsatz (48) an der festen Seite, der an der Formmatrize (4) an der festen Seite angebracht ist, und einen Einsatz (58) an der beweglichen Seite, der an der Formmatrize (5) an der beweglichen Seite angebracht ist, wobei der Einsatz (48) an der festen Seite und der Einsatz (58) an der beweglichen Seite jeweils offene Seiten aufweisen, die Hohlraumoberflächen bilden, wobei der Einsatz (48) an der festen Seite und der Einsatz (58) an der beweglichen Seite jeweils mehrere Wärmemediumdurchgänge (48a) aufweisen, die an Positionen mit konstanten Abständen von den Hohlraumoberflächen hindurchführend gebildet sind,
**dadurch gekennzeichnet, dass** es ferner umfasst:

Wärmeisolierplatten (38, 39), die jeweils zwischen die Einsätze (48, 58) und die Formmatrizen (4, 5) eingefügt sind, wobei die Wärmeisolierplatten (38, 39) jeweils eine Wärmeleitfähigkeit von 5 W/(m·K) oder weniger aufweisen,
Paare von Wärmemediumsammelrohren (49), die auf eine solche Weise an beiden Rändern jener Oberflächen der Einsätze (48, 58), die zu den Hohlraumoberflächen entgegengesetzt sind, angebracht sind, dass die Wärmemediumsammelrohre (49) jeweils mit den Wärmemediumdurchgängen (48a) der Einsätze (48, 58) in Verbindung stehen, und
mehrere Halteelemente (42, 43), um vier Kanten eines jeden der Einsätze (48, 58) zu halten, um die Einsätze (48, 58) jeweils an den Formmatrizen (4, 5) zu fixieren,
dass der Einsatz (48) an der festen Seite und der Einsatz (58) an der beweglichen Seite rechteckige Plattenformen mit Dicken von 15 bis 30 mm aufweisen, und
dass der Einsatz (48) an der festen Seite und der Einsatz (58) an der beweglichen Seite aus Metall mit einer Wärmeleitfähigkeit von 20 bis 40 W/(m.K) bestehen.

2. Formwerkzeug (4, 5) nach Anspruch 1, wobei die Einsätze (48, 58) jeweils aus einem Material bestehen, das Edelstahl umfasst, und
wobei die Wärmeisolierplatten (38, 39) jeweils aus glasfaserverstärktem hitzebeständigen Harz oder aus Keramik bestehen.

3. Vorrichtung (30) zur Regulierung der Temperatur eines Formwerkzeugs, umfassend: das Formwerkzeug (4, 5) nach Anspruch 1; ein Zwischentemperatur-Reguliermittel (24, 28, 53, 57), um eine Temperatur eines Wärmemediums thermisch auf eine bestimmte Temperatur in der Nähe eines Glasübergangspunkts eines Harzes für einen Formgegenstand (50) zu regulieren; ein Niedertemperatur-Reguliermittel (23, 26, 29, 52, 56), um das Wärmemedium thermisch auf eine bestimmte Niedertemperatur zu regulieren; wobei die Vorrichtung (30) zur Regulierung der Temperatur eines Formwerkzeugs dazu gestaltet ist, auf eine solche Weise selektiv zwischen dem Wärmemedium. das durch das Zwischentemperatur-Reguliermittel (24, 28, 53, 57) thermisch reguliert wird, und dem Wärmemedium, das durch das Niedertemperatur-Reguliermittel (23, 26, 29, 52, 56) thermisch reguliert wird, umzuschalten, dass das gewählte Wärmemedium zu den Wärmemediumdurchgängen (48a) der Einsätze (48, 58) geführt wird, um dadurch eine Temperatursteuerung der Einsätze (48, 58) durchzuführen,
wobei die Vorrichtung (30) zur Regulierung der Temperatur eines Formwerkzeugs ferner umfasst:

mehrere Einsatztemperaturfeststellmittel (65, 66), um jeweils die Einsatztemperaturen der Formwerkzeughälfte an der festen Seite und der Formwerkzeughälfte an der beweglichen Seite festzustellen,
ein Einsatztemperatureinstellmittel (47), um eine Zwischentemperatur-Wärmemediumtemperatur ($T_{HW}$), eine Niedertemperatur-Wärmemediumtemperatur ($T_{LW}$), eine Einsatztemperatur ($T_H$) für das Beginnen des Füllens von geschmolzenem Harz in das Formwerkzeug (4, 5), eine Einsatztemperatur ($T_M$) für das Anhalten der Zufuhr des Niedertemperatur-Wärmemediums und das Beginnen der Einkapselung des Niedertemperatur-Wärmemediums, und eine Einsatztemperatur ($T_L$) für den Abschluss des Kühlens des eingefüllten Harzes und das Beginnen des Öffnens des Formwerkzeugs einzustellen,

ein Einsatztemperatursteuermittel, um die Einsatztemperaturen jeweils auf bestimmte Temperaturen zu steuern,
einen Timer ($S_H$), um eine Verweilzeit-Begrenzungszeit einzustellen,
einen Timer (S1), um einen Zeitraum von dem Beginnen der Verweilzeit bis zum Öffnen von Wärmemediumauslässen (33, 35a), um das Niedertemperatur-Wärmemedium in die Einsätze (48, 58) zu führen, einzustellen,
einen Timer (S2), um einen Zeitraums von dem Einkapseln des Niedertemperatur-Wärmemediums in den Einsätzen (48, 58) bis zum Beenden der Einkapselung und dem Beginnen der Zufuhr des Zwischentemperatur-Wärmemediums einzustellen, und
ein Anzeigemittel (46), das fähig ist, die bestimmten Werte in Bezug auf eine Einsatztemperaturkurve für einen Formprozess an einem Bildschirm anzuzeigen, und fähig ist, den Bildschirm umzuschalten, um tatsächlich gemessene Werte für Temperaturen der Einsätze (48,58) in einem tatsächlichen Formprozess gleichzeitig mit den bestimmten Werten oder durch die tatsächlich gemessenen Werte selbst anzuzeigen.

**4.** Spritzgießverfahren, das die Vorrichtung (30) zur Regulierung der Temperatur eines Formwerkzeugs nach Anspruch 3 einsetzt, um die Einsätze (48, 58) des Formwerkzeugs (4, 5) zu erhitzen, bevor das geschmolzene Harz eingefüllt wird, und um die Einsätze (48, 58) nach dem Einfüllen des geschmolzenen Harzes zu kühlen, wobei das Verfahren die folgenden Schritte umfasst:

Führen eines Zwischentemperatur-Wärmemediums zu den Einsätzen (48, 58), wobei das Medium im Wesentlichen bei der gleichen Temperatur wie jener eines Tg liegt, wobei der Tg ein Glasübergangspunkt des Harzes ist,
Anhalten der Zufuhr des Zwischentemperatur-Wärmemediums zu jener Zeit, zu der die Einsatztemperatur eine Temperatur $T_H$ = Tg - 5 °C bis Tg - 10 °C erreicht hat, wobei die Temperatur $T_H$ eine Einsatztemperatur zum Beginnen eines Einfüllprozesses ist,
Schließen der Wärmemediumauslässe (33, 35a), um das Zwischentemperatur-Wärmemedium in den Einsätzen (48, 58) einzukapseln, und, in diesem Zustand, Beginnen des Einspritzens durch eine Formmaschine, um ein geschmolzenes Harz in das Formwerkzeug (4, 5) zu füllen.
Beginnen der Verweilzeit des Harzes und Halten der Einsatztemperatur bei einer aufgrund der Hitze des geschmolzenen Harzes erhöhten Temperatur $T_S$ = Tg bis Tg+10°C,
nach dem Ablauf einer bestimmten Zeit ab dem Beginn der Verweilzeit Öffnen der Wärmemediumauslässe (33, 35a) und Führen eines Niedertemperatur-Wärmemediums in die Einsätze (48, 58), um einen Kühlprozess der Einsätze (48, 58) auf eine solche Weise voranzutreiben, dass das in den Wärmemediumdurchgängen (48a) in den Einsätzen (48, 58) gesammelte Zwischentemperatur-Wärmemedium ausgestoßen wird, während die Zufuhr des Niedertemperatur-Wärmemediums fortgesetzt wird,
Beenden der Verweilzeit des Harzes nach dem Ablauf einer Verweilzeit-Begrenzungszeit, oder wenn die Formwerkzeugtemperatur Tg oder weniger erreicht hat,
nachdem die Einsatztemperatur $T_M$ = Tg - 5 °C bis Tg - 15 °C erreicht hat, Anhalten der Zufuhr des Niedertemperatur-Wärmemediums in die Einsätze (48, 58), und gleichzeitig damit Schließen der Wärmemediumauslässe (33, 35a), um das Niedertemperatur-Wärmemedium in den Einsätzen (48, 58) einzukapseln, um dadurch ein langsames Abkühlen der Einsätze (48, 58) durchzuführen,
wenn die Einsatztemperatur eine Wärmeverformungstemperatur $T_L$ eines geformten Gegenstands (50) oder weniger erreicht hat, Öffnen des Formwerkzeugs (4, 5), um den geformten Gegenstand (50) daraus zu entnehmen, und
anschließend Umschalten zu dem Zwischentemperatur-Wärmemedium und Öffnen der Wärmemediumauslässe (33, 35a), um das Niedertemperatur-Wärmemedium aus den Einsätzen (48, 58) auszustoßen, wodurch die Einsatztemperatur bis zu der Temperatur $T_H$ zum erneuten Beginnen des Einfüllprozesses erhöht wird.

**5.** Spritzgießverfahren nach Anspruch 4, ferner umfassend die folgenden Schritte:

Anzeigen der tatsächlichen Formwerkzeugeinsatztemperatur in dem Formprozess nach dem Spritzgießverfahren von Anspruch 4 für jeden Zyklus des Einspritzprozesses auf dem Bildschirm (46) des Anzeigemittels (47) der Spritzgießmaschine (1),
Regulieren bestimmter Werte einer Zwischentemperatur-Wärmemediumtemperatur ($T_{HW}$), einer Niedertemperatur-Wärmemediumtemperatur ($T_{LW}$), einer Formwerkzeugeinsatztemperatur ($T_H$) zur Zeit des Beginnens des Einfüllens, einer Temperatur ($T_M$) zur Zeit des Anhaltens der Zufuhr des Niedertemperatur-Wärmemediums und einer Einsatztemperatur ($T_L$) zur Zeit des Beginnens des Öffnens des Formwerkzeugs auf eine solche Weise, dass der Formzustand eines Harzes durch die Spritzgießmaschine (1) optimiert wird, und
Überwachen der Formwerkzeugeinsatztemperatur während des Einspritzprozesses.

**6.** Spritzgießmaschine (1), das die Vorrichtung (30) zur Regulierung der Temperatur eines Formwerkzeugs nach Anspruch 3 aufweist, wobei die Spritzgießmaschine (1) eine Anzeigeansicht zum Einstellen einer Einspritz/Füllprozess-Bedingung umfasst, wobei die Anzeigeansicht mit der Anzeigeansicht des Anzeigemittels (46) der Vorrichtung (30) zur Regulierung der Temperatur eines Formwerkzeugs austauschbar auf dem gleichen Bildschirm des Anzeigemittels (46) der Vorrichtung (30) zur Regulierung der Temperatur eines Formwerkzeugs angezeigt werden kann.

**7.** Formwerkzeug (4, 5) nach Anspruch 1 oder 2, wobei die Hohlraumoberflächen und die Wärmemediumdurchgänge (48a) so angeordnet sind, dass
$c/t \geq 0{,}58$ und $p/c \leq 1{,}1$ ist,
wobei "c" ein Abstand von jeder Hohlraumoberfläche zu einer Mitte des zugehörigen Wärmemediumdurchgang (48a) ist,
"t" eine Dicke jedes Einsatzes (48, 58) ist, und
"p" eine Beabstandungsschrittlänge der Wärmemediumdurchgänge (48a) ist.

**8.** Formwerkzeug (4, 5) nach Anspruch 1, 2 oder 7, wobei die Wärmemediumdurchgänge (48a) und die zugehörigen Sammelrohre (49) an Positionen, an denen die Wärmemediumdurchgänge (48a) und die zugehörigen Sammelrohre (49) miteinander in Verbindung gebracht sind, so angeordnet sind, dass

$$f \leq 3d$$

ist,
wobei "d" ein Innendurchmesser jedes Wärmemediumdurchgangs ist, und
"f" eine Tiefe von einem distalen Rand einer Verbindungsöffnung des zugehörigen Sammelrohrs zu einem geschlossenen Ende des Wärmemediumdurchgangs ist.

**9.** Formwerkzeug nach Anspruch 1, 2, 7 oder 8, wobei das Formwerkzeug ferner einen Schmelzharz-Angussbuchsenstift (68) umfasst, der den zugehörigen (48) der Einsätze (48, 58) durchdringt, und
wobei der Angussbuchsenstift (68) eine Seitenfläche aufweist, die in Übereinstimmung mit einer Position, an der maßgebliche Wärmemediumdurchgänge (48a) des zugehörigen Einsatzes (48) den Angussbuchsenstift (68) überlagern, mit einer Aussparung (68a) ausgeführt ist, wodurch das Auftreten einer Verengung in den Wärmemediumdurchgängen (48a) vermieden wird.

**10.** Formwerkzeug nach Anspruch 1, 2, 7 oder 8, wobei das Formwerkzeug ferner einen Schmelzharz-Angussbuchsenstift (168) umfasst, der den zugehörigen (48) der Einsätze (48, 58) durchdringt, und
wobei der Angussbuchsenstift (168) eine Seitenfläche aufweist, die in Übereinstimmung mit einer Position, an der maßgebliche Wärmemediumdurchgänge (48a) des zugehörigen Einsatzes (48) den Angussbuchsenstift (168) überlagern, mit einer Auskehlung (168a) ausgeführt ist, die mit einer Mittelachse (X) des Angussbuchsenstifts (168) konzentrisch ist, wodurch ein Wärmemedium-Umgehungsdurchgang (101) definiert wird, der sich rund um den Angussbuchsenstift (168) erstreckt.

**11.** Formwerkzeug nach Anspruch 1, 2, 7 oder 8, wobei das Formwerkzeug ferner einen Schmelzharz-Angussbuchsenstift (268) umfasst, der den zugehörigen (48) der Einsätze (48, 58) durchdringt, und
wobei der Einsatz (48) eine Einsatzöffnung (248), die den Einsatz (48) durchdringt, und in die der Angussbuchsenstift (268) passt, auf eine solche Weise aufweist, dass die Einsatzöffnung (248) eine Innenfläche aufweist, die in Übereinstimmung mit einer Position, an der die Wärmemediumdurchgänge (48a) des Einsatzes (48) den Angussbuchsenstift (268) überlagern, mit einer Auskehlung (248a) ausgeführt ist, welche mit einer Mittelachse (X) des Angussbuchsenstifts (268) konzentrisch ist, wodurch ein Wärmemedium-Umgehungsdurchgang (102) definiert wird, der sich rund um den Angussbuchsenstift (268) erstreckt.

**12.** Formwerkzeug nach Anspruch 1, 2, 7 oder 8, wobei das Formwerkzeug ferner einen Schmelzharz-Angussbuchsenstift (368) umfasst, der den zugehörigen (48) der Einsätze (48, 58) durchdringt, und
wobei der Einsatz (48) eine Einsatzöffnung (348), die den Einsatz (48) durchdringt, und in die der Angussbuchsenstift (368) passt, auf eine solche Weise aufweist, dass der Angussbuchsenstift (368) eine Seitenfläche aufweist, die mit einer Auskehlung (368a) ausgeführt ist, welche mit einer Mittelachse (X) des Angussbuchsenstifts (368) konzentrisch ist, und die Einsatzöffnung (348) eine Innenfläche aufweist, die mit einer Auskehlung (348a) ausgeführt ist, welche ebenfalls mit der Mittelachse (X) konzentrisch ist, wobei beide mit einer Position übereinstimmen, an der die Wärmemediumdurchgänge (48a) des Einsatzes (48) den Angussbuchsenstift (368) überlagern, so dass die Auskehlung (368a) des Angussbuchsenstifts (368) und die Auskehlung (348a) der Einsatzöffnung (348) gemeinsam einen Wärmemedium-Umgehungdurchgang (103) definieren, der sich rund um den Angussbuchsenstift (368) erstreckt, wenn der Angussbuchsenstift (368) in die Einsatzöffnung (348) gepasst ist.

**13.** Formwerkzeug nach Anspruch 1, 2, 7 oder 8, wobei das Formwerkzeug ferner einen Schmelzharz-Angussbuchsenstift (468) umfasst, der den zugehörigen (48) der Einsätze (48, 58) durchdringt, und
wobei der Einsatz (48) eine Einsatzöffnung (448), die den Einsatz (48) durchdringt, und in die der Angussbuchsenstift (468) passt, auf eine solche Weise aufweist, dass der Angussbuchsenstift (468) eine Seitenfläche mit Abschnitten mit einem großen Außendurchmesser und einem kleinen Außendurchmesser aufweist, um dazwischen einen Stufenabschnitt (468a) zu bilden, und die Einsatzöffnung (448) ebenfalls Abschnitte mit einem großen Innendurchmesser und einem kleinen Innendurchmesser aufweist, um dazwischen einen Stufenabschnitt (448a) zu bilden, wobei beide mit einer Position übereinstimmen, an der die Wärmemediumdurchgänge (48a) des Einsatzes (48) den Angussbuchsenstift überlagern, so dass die Stufenabschnitte (468a, 448a) des Angussbuchsenstifts (468) und der Einsatzöffnung (448) aufgrund des dazwischen bestehenden positionalen Unterschieds gemeinsam einen Raum definieren, der sich um den Stift (468) erstreckt, und der Raum einen Wärmemedium-Umgehungsdurchgang (104) definiert, der sich rund um den Angussbuchsenstift (468) erstreckt, wenn der Angussbuchsenstift (468) in die Einsatzöffnung (448) gepasst ist.

**14.** Formwerkzeug nach Anspruch 10, 11, 12 oder 13, wobei die Wärmemediumdurchgänge (48a), die den Einsatz (48) durchdringen, in der Nähe der stromaufwärts und der stromabwärts befindlichen Seite des Angussbuchsenstifts (568) jeweils mit quer verlaufenden Wärmemediumdurchgängen (505) versehen sind, die mit einer Position oder Ebene übereinstimmen, an der die Wärmemediumdurchgänge (48a) des Einsatzes (48) den Angussbuchsenstift (568) überlagen, so dass die Durchgänge (505) die Wärmemediumdurchgänge (48a) in der Querrichtung miteinander verbinden.

**15.** Formwerkzeug nach Anspruch 1, 2, 7 oder 8, wobei das Formwerkzeug ferner einen Schmelzharz-Angussbuchsenstift (668) umfasst, der den zugehörigen (48) der Einsätze (48, 58) durchdringt, und
wobei der Angussbuchsenstift (668) eine Seitenfläche aufweist, die mit Auskehlungen (668a) ausgeführt ist, wobei die Auskehlungen so angeordnet sind, das sie zueinander in der Richtung des Wärmemediumdurchgangs (48a) um eine Mittelachse (X) des Angussbuchsenstifts (668) entgegengesetzt sind, wobei die Auskehlungen in einer Richtung ausgerichtet sind, die im Wesentlichen senkrecht zu den Wärmemediumdurchgängen (48a) verläuft, und wobei der Angussbuchsenstift (668) mit Wärmemediumverbindungsdurchgängen (668b) ausgeführt ist, die den Angussbuchsenstift (668) im Wesentlichen senkrecht zu den entgegengesetzten Auskehlungen (668a) durchdringen, um die Auskehlungen (668a) dadurch jeweils miteinander zu verbinden, wodurch ein Wärmemedium-Umgehungsdurchgang (106) gebildet wird, der sich im Wesentlichen rund um den Angussbuchsenstift (668) erstreckt.

**Revendications**

**1.** Moule (4, 5) comportant :

un demi-moule d'un côté fixe configuré avec une matrice de moule du côté fixe (4) et un demi-moule d'un côté mobile configuré avec une matrice de moule du côté mobile (5) ;
un revêtement du côté fixe (48) fixé sur la matrice de moule du côté fixe (4) et un revêtement du côté mobile (58) fixé sur la matrice de moule du côté mobile (5), le revêtement du côté fixe (48) et le revêtement du côté mobile (58) ayant des côtés ouverts formant des surfaces de cavité, respectivement, le revêtement du côté fixe (48) et le revêtement du côté mobile (58) ayant de multiples passages traversants de fluide caloporteur (48a) formés dans des positions situées à des distances constantes des surfaces de cavité, respectivement ;
**caractérisé en ce qu'**il comporte en outre
des plaques d'isolation thermique (38, 39) interposées entre les revêtements (48, 58) et les matrices de moule (4, 5), respectivement, les plaques d'isolation thermique (38, 39) ayant chacune une conductivité thermique de 5 W(m.K) ou moins ;
des paires de collecteurs de fluide caloporteur (49) fixés sur les deux bords des surfaces de revêtements (48, 58) qui sont à l'opposé des surfaces de cavité, respectivement, d'une manière telle que les collecteurs de fluide caloporteur (49) sont en communication avec les passages de fluide caloporteur (48a) des revêtements (48, 58), respectivement ; et
de multiples éléments de maintien (42, 43) destinés à maintenir quatre bords de chacun des revêtements (48, 58) pour fixer les revêtements (48, 58) sur les matrices de moule (4, 5), respectivement,

**en ce que** le revêtement du côté fixe (48) et le revêtement du côté mobile (58) sont en forme de plaque rectangulaire ayant des épaisseurs de 15 à 30 mm, et
**en ce que** le revêtement du côté fixe (48) et le revêtement du côté mobile (58) sont fabriqués en métal ayant une conductivité thermique de 20 à 40 W(m.K).

**2.** Moule (4, 5) selon la revendication 1, dans lequel les revêtements (48, 58) sont fabriqués chacun dans une matière comportant de l'acier inoxydable, et
dans lequel les plaques d'isolation thermique (38, 39) sont fabriquées chacune en résine résistant à la chaleur renforcée de fibre de verre, ou en céramique.

**3.** Appareil de réglage de température de moule (30) comportant : le moule (4, 5) selon la revendication 1 ; des moyens de réglage de température intermédiaire (24, 28, 53, 57) destinés à ajuster thermiquement une température d'un fluide caloporteur à une température spécifiée proche d'un point de transition vitreuse d'une résine pour un article moulé (50) ; des moyens de réglage de température basse (23, 26, 29, 52, 56) destinés à ajuster thermiquement le fluide caloporteur à une température basse spécifiée ; l'appareil de réglage de température de moule (30) étant configuré pour changer de manière sélective entre le fluide caloporteur thermiquement ajusté par les moyens de réglage de température intermédiaire (24, 28, 53, 57) et le fluide caloporteur thermiquement ajusté par les moyens de réglage de température basse (23, 26, 29, 52, 56) de manière à délivrer le fluide caloporteur sélectionné aux passages de fluide caloporteur (48a) des revêtements (48, 58) afin de réaliser ainsi la commande de température des revêtements (48, 58) ;
l'appareil de réglage de température de moule (30) comportant en outre :

une pluralité de moyens de détection de température de revêtement (65, 66) destinés à détecter les températures de revêtement du demi-moule du côté fixe et du demi-moule du côté mobile, respectivement ;
des moyens d'établissement de température de revêtement (47) destinés à établir une température de fluide caloporteur à température intermédiaire ($T_{HW}$), une température de fluide caloporteur à basse température ($T_{LW}$), une température de revêtement ($T_H$) pour le début de la coulée de résine fondue dans le moule (4, 5), une température de revêtement ($T_M$) pour l'arrêt de l'alimentation du fluide caloporteur à basse température et le début de l'encapsulation du fluide caloporteur à basse température, et une température de revêtement ($T_L$) pour la fin du refroidissement et le début de l'ouverture de moule ;
des moyens de commande de température de revêtement destinés à commander les températures de revêtement à des températures spécifiées, respectivement ;
un temporisateur ($S_L$) destiné à établir un temps de séjour limite;
un temporisateur (S1) destiné à établir une durée depuis le début du temps de séjour jusqu'à ce que les sorties de fluide caloporteur (33, 35a) soient ouvertes pour délivrer le fluide caloporteur à température basse dans les revêtements (48, 58) ;
un temporisateur (S2) destiné à établir une durée depuis l'encapsulation du fluide caloporteur à température basse dans les revêtements (48, 58) jusqu'à ce que l'encapsulation soit terminée et le fluide caloporteur à température intermédiaire commence à être délivré ; et
des moyens d'affichage (46) capables d'afficher les valeurs spécifiées par rapport à une courbe de température de revêtement pour un processus de moulage sur un écran, et capables de commuter l'écran pour afficher des valeurs réellement mesurées des températures des revêtements (48, 58) dans un processus de moulage réel, simultanément avec les valeurs spécifiées ou par les valeurs réellement mesurées elles-mêmes.

**4.** Procédé de moulage par injection adoptant l'appareil de réglage de température de moule (30) selon la revendication 3, pour chauffer les revêtements (48, 58) du moule (4, 5) avant de couler la résine fondue et pour refroidir les revêtements (48, 58) après avoir coulé la résine fondue, le procédé comportant les étapes consistant à :

délivrer un fluide caloporteur à température intermédiaire aux revêtements (48, 58), lequel fluide est sensiblement à la même température que Tg où Tg est un point de transition vitreuse de la résine ;
arrêter l'alimentation en fluide caloporteur à température intermédiaire au moment où la température de revêtement a atteint une température $T_H$ = Tg - 5°C à Tg - 10°C, laquelle température $T_H$ est une température de revêtement pour le début d'un processus de remplissage ;
fermer les sorties de fluide caloporteur (33, 35a) afin d'enfermer le fluide caloporteur à température intermédiaire dans les revêtements (48, 58), et dans cet état, commencer l'injection par une machine de moulage afin de couler une résine fondue dans le moule (4, 5) ;
commencer le temps de séjour de la résine, et maintenir la température de revêtement augmentée à une température $T_s$ = Tg à Tg + 10°C grâce à la chaleur de la résine fondue ;

après écoulement d'un temps spécifié depuis le début du temps de séjour, ouvrir les sorties de fluide caloporteur (33, 35a) et délivrer un fluide caloporteur à température basse dans les revêtements (48, 58) pour démarrer un procédé de refroidissement des revêtements (48, 58) de manière à évacuer le fluide caloporteur à température intermédiaire accumulé dans les passages de fluide caloporteur (48a) dans les revêtements (48, 58) tout en continuant à délivrer le fluide caloporteur à température basse ;

terminer le temps de séjour de la résine, après écoulement d'un temps de séjour limite, ou bien quand la température de moule a atteint Tg ou en dessous ;

une fois que la température de revêtement a atteint $T_M$ = Tg - 5°C à Tg - 15°C, arrêter l'alimentation en fluide caloporteur à température basse dans les revêtements (48, 58), et simultanément, fermer les sorties de fluide caloporteur (33, 35a) pour enfermer le fluide caloporteur à température basse dans les revêtements (48, 58) afin de réaliser ainsi un refroidissement lent des revêtements (48, 58) ;

quand la température de revêtement a atteint une température de déformation thermique $T_L$ d'un article moulé (50) ou en dessous, ouvrir le moule (4, 5) pour en sortir l'article moulé (50) ; et

ensuite, changer pour le fluide caloporteur à température intermédiaire, et ouvrir les sorties de fluide caloporteur (33, 35a) pour évacuer le fluide caloporteur à température basse des revêtements (48, 58), en élevant ainsi la température de revêtement vers la température TH pour reprendre le processus de remplissage.

**5.** Procédé de moulage par injection selon la revendication 4, comportant en outre les étapes consistant à :

afficher, sur l'écran (46) des moyens d'affichage (47) de la machine de moulage par injection (1), la température de revêtement de moule réellement mesurée dans le processus de moulage selon le procédé de moulage par injection selon la revendication 4, pour chaque cycle du processus d'injection ;

ajuster des valeurs spécifiées d'une température de fluide caloporteur à température intermédiaire ($T_{HW}$), d'une température de fluide caloporteur à température basse ($T_{LW}$), d'une température de revêtement de moule à étoile de remplissage ($T_H$), d'une température d'arrêt d'alimentation en fluide caloporteur à température basse ($T_M$), et d'une température de revêtement de début d'ouverture de moule ($T_L$), de manière à optimiser la condition de moulage d'une résine par la machine de moulage par injection (1) pour atteindre ainsi le temps de cycle de moulage le plus court ; et

surveiller la température de revêtement de moule pendant le processus d'injection.

**6.** Machine de moulage par injection (1) ayant l'appareil de réglage de température de moule (30) selon la revendication 3, dans laquelle la machine de moulage par injection (1) comporte une vue d'affichage pour établir une condition de processus d'injection/remplissage, laquelle vue d'affichage peut être affichée sur le même écran des moyens d'affichage (46) de l'appareil de réglage de température de moule (30), de manière interchangeable avec la vue d'affichage des moyens d'affichage (46) de l'appareil de réglage de température de moule (30).

**7.** Moule (4, 5) selon la revendication 1 ou 2, dans lequel les surfaces de cavité et les passages de fluide caloporteur (48a) sont agencés de telle sorte que :

$c/t \geq 0{,}58$, et $p/c \leq 1{,}1$

où « c » est une distance depuis chaque surface de cavité jusqu'à un centre du passage de fluide caloporteur (48a) associé,

« t » est une épaisseur de chaque revêtement (48, 58), et

« p » est un pas d'espacement des passages de fluide caloporteur (48a).

**8.** Moule (4, 5) selon la revendication 1, 2, ou 7, dans lequel, dans des positions où les passages de fluide caloporteur (48a) et les collecteurs associés (49) sont en communication l'un avec l'autre, les passages de fluide caloporteur (48a) et les collecteurs associés (49) sont agencés de telle sorte que :

$$f \leq 3d$$

où « d » est un diamètre intérieur de chaque passage de fluide caloporteur ; et

« f » est une profondeur depuis un bord distal d'un trou de communication du collecteur associé jusqu'à une extrémité fermée du passage de fluide caloporteur.

**9.** Moule selon la revendication 1, 2, 7, ou 8, dans lequel le moule comporte en outre une broche à trou d'entrée de résine fondue (68) qui pénètre à travers le revêtement associé (48) des revêtements (48, 58) ; et
dans lequel la broche à trou d'entrée (68) a une surface latérale formée avec un renfoncement (68a) en correspondance avec une position où des passages de fluide caloporteur applicables (48a) du revêtement associé (48) interfèrent avec la broche à trou d'entrée (68), évitant ainsi l'apparition d'un étranglement dans les passages de fluide caloporteur (48a).

**10.** Moule selon la revendication 1, 2, 7, ou 8, dans lequel le moule comporte en outre une broche à trou d'entrée de résine fondue (168) qui pénètre à travers le revêtement associé (48) des revêtements (48, 58) ; et
dans lequel la broche à trou d'entrée (168) a une surface latérale formée avec une rainure (168a) concentrique à un axe central (X) de la broche à trou d'entrée (168) en correspondance avec une position où des passages de fluide caloporteur applicables (48a) du revêtement associé (48) interfèrent avec la broche à trou d'entrée (168), définissant ainsi un passage de contournement de fluide caloporteur (101) s'étendant autour de la broche à trou d'entrée (168).

**11.** Moule selon la revendication 1, 2, 7, ou 8, dans lequel le moule comporte en outre une broche à trou d'entrée de résine fondue (268) qui pénètre à travers le revêtement associé (48) des revêtements (48, 58) ; et
dans lequel le revêtement (48) a un trou de revêtement (248) qui pénètre à travers le revêtement (48) et dans lequel s'ajuste la broche à trou d'entrée (268), d'une manière telle que le trou de revêtement (248) a une surface intérieure formée avec une rainure (248a) concentrique à un axe central (X) de la broche à trou d'entrée (268) en correspondance avec une position où les passages de fluide caloporteur (48a) du revêtement associé (48) interfèrent avec la broche à trou d'entrée (268), définissant ainsi un passage de contournement de fluide caloporteur (102) s'étendant autour de la broche à trou d'entrée (268).

**12.** Moule selon la revendication 1, 2, 7, ou 8, dans lequel le moule comporte en outre une broche à trou d'entrée de résine fondue (368) qui pénètre à travers le revêtement associé (48) des revêtements (48, 58) ; et
dans lequel le revêtement (48) a un trou de revêtement (348) qui pénètre à travers le revêtement (48) et dans lequel s'ajuste la broche à trou d'entrée (368), d'une manière telle que la broche à trou d'entrée (368) a une surface latérale formée avec une rainure (368a) concentrique à un axe central (X) de la broche à trou d'entrée (368) et le trou de revêtement (348) a une surface intérieure formée avec une rainure (348a) également concentrique à l'axe central (X), tous deux en correspondance avec une position où les passages de fluide caloporteur (48a) du revêtement (48) interfèrent avec la broche à trou d'entrée (368), de telle sorte que la rainure (368a) de la broche à trou d'entrée (368) et la rainure (348a) du trou de revêtement (348) définissent ensemble un passage de contournement de fluide caloporteur (103) s'étendant autour de la broche à trou d'entrée (368) quand la broche à trou d'entrée (368) est montée dans le trou de revêtement (348).

**13.** Moule selon la revendication 1, 2, 7, ou 8, dans lequel le moule comporte en outre une broche à trou d'entrée de résine fondue (468) qui pénètre à travers le revêtement associé (48) des revêtements (48, 58) ; et
dans lequel le revêtement (48) a un trou de revêtement (448) qui pénètre à travers le revêtement (48) et dans lequel s'ajuste la broche à trou d'entrée (468), d'une manière telle que la broche à trou d'entrée (468) a une surface latérale avec des parties de grand diamètre extérieur et des parties de petit diamètre extérieur formant entre elles une partie étagée (468a) et le trou de revêtement (448) a également une surface intérieure avec des parties de grand diamètre intérieur et des parties de petit diamètre intérieur formant entre elles une partie étagée (448a), toutes deux en correspondance avec une position où les passages de fluide caloporteur (48a) du revêtement (48) interfèrent avec la broche à trou d'entrée, de telle sorte que les parties étagées (468a, 448a) de la broche à trou d'entrée (468) et du trou de revêtement (448) définissent ensemble, grâce à leur différence de position, un espace s'étendant autour de la broche (468), et l'espace définit un passage de contournement de fluide caloporteur (104) s'étendant autour de la broche à trou d'entrée (468) quand la broche à trou d'entrée (468) est montée dans le trou de revêtement (448).

**14.** Moule selon la revendication 10, 11, 12, ou 13, dans lequel les passages de fluide caloporteur (48a) qui pénètrent à travers le revêtement (48) sont pourvus de passages transversaux de fluide caloporteur (505) près des côtés amont et aval de la broche à trou d'entrée (568), respectivement, en correspondance avec une position ou un niveau où les passages de fluide caloporteur (48a) du revêtement (48) interfèrent avec la broche à trou d'entrée (568), de telle sorte que les passages (505) font communiquer transversalement les passages de fluide caloporteur (48a) entre eux, respectivement.

**15.** Moule selon la revendication 1, 2, 7, ou 8, dans lequel le moule comporte en outre une broche à trou d'entrée de résine fondue (668) qui pénètre à travers le revêtement associé (48) des revêtements (48, 58) ; et
dans lequel la broche à trou d'entrée (668) a une surface latérale formée avec des rainures (668a), lesquelles rainures sont disposées de façon à être à l'opposé l'une de l'autre dans la direction du passage de fluide caloporteur (48a) autour d'un axe central (X) de la broche à trou d'entrée (668) et lesquelles rainures sont orientées dans une direction sensiblement perpendiculaire aux passages de fluide caloporteur (48a), et la broche à trou d'entrée (668) est formée avec des passages de communication de fluide caloporteur (668b) qui pénètrent dans la broche à trou d'entrée (668) d'une manière sensiblement perpendiculaire aux rainures opposées (668a) afin de faire communiquer ainsi les rainures (668a) l'une avec l'autre, respectivement, en définissant ainsi un passage de contournement de fluide caloporteur (106) s'étendant sensiblement autour de la broche à trou d'entrée (668).

FIG. 1

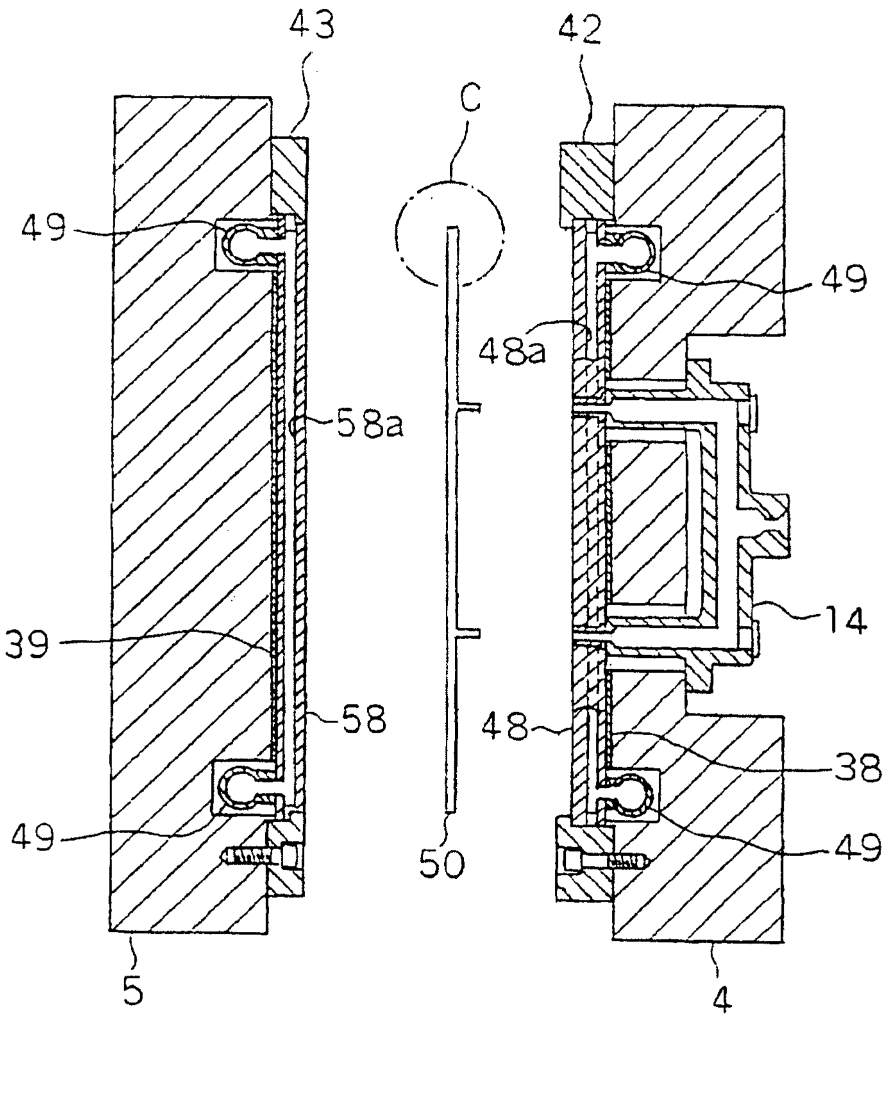

FIG. 2

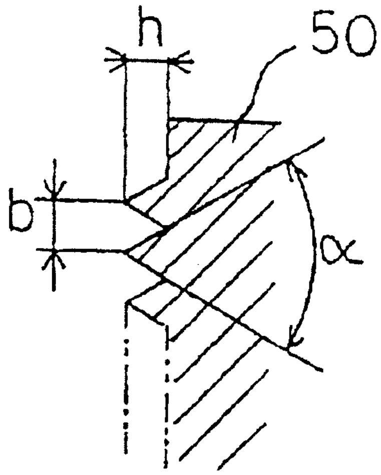


FIG. 3

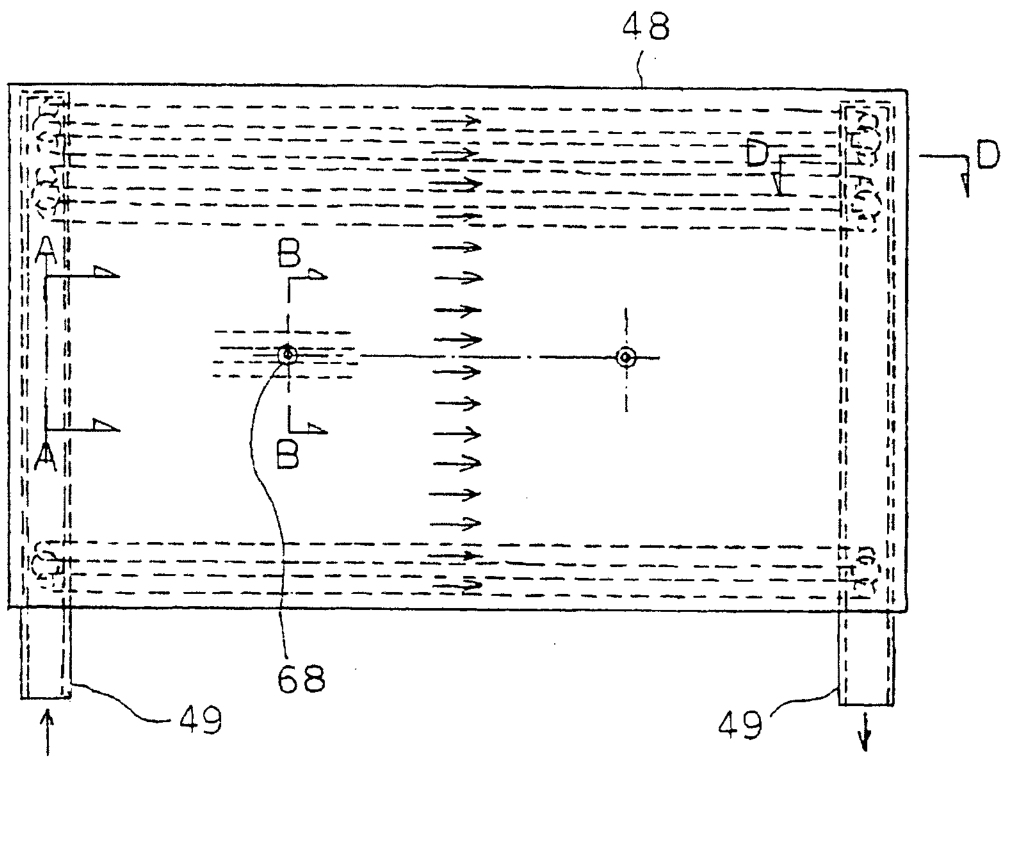

FIG. 4

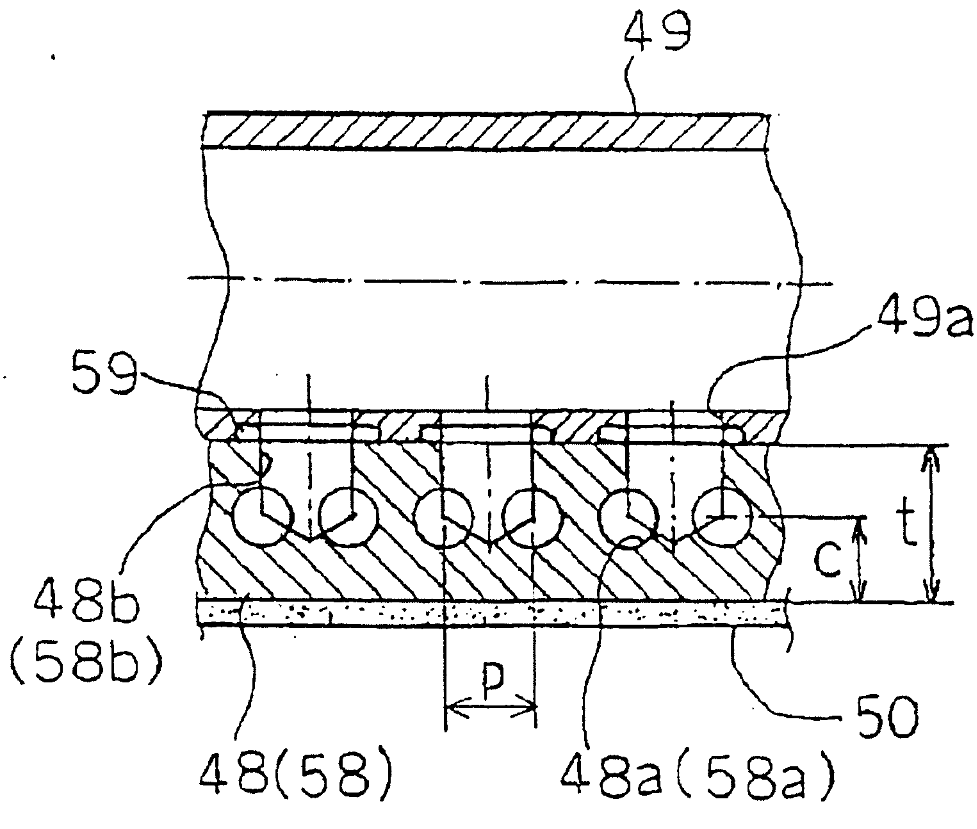

FIG. 5

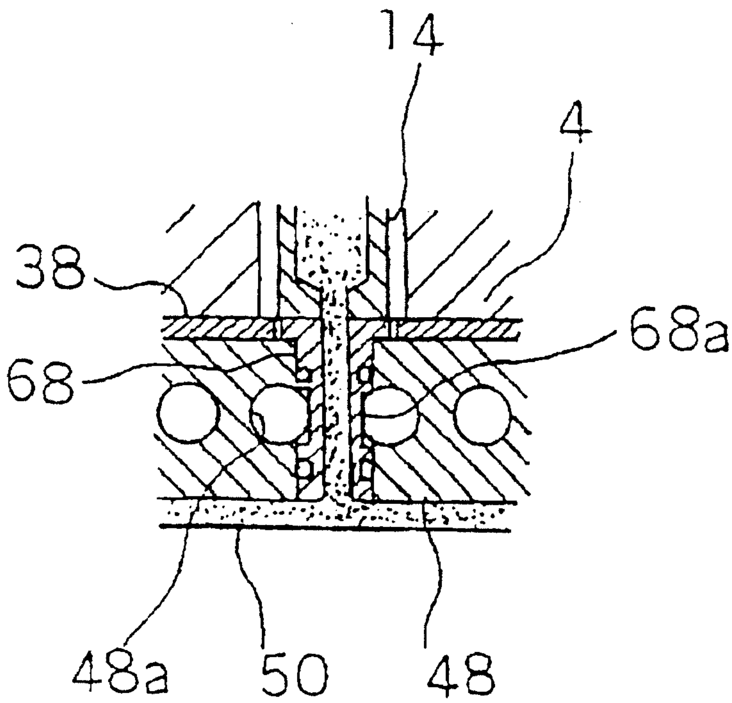

FIG. 6

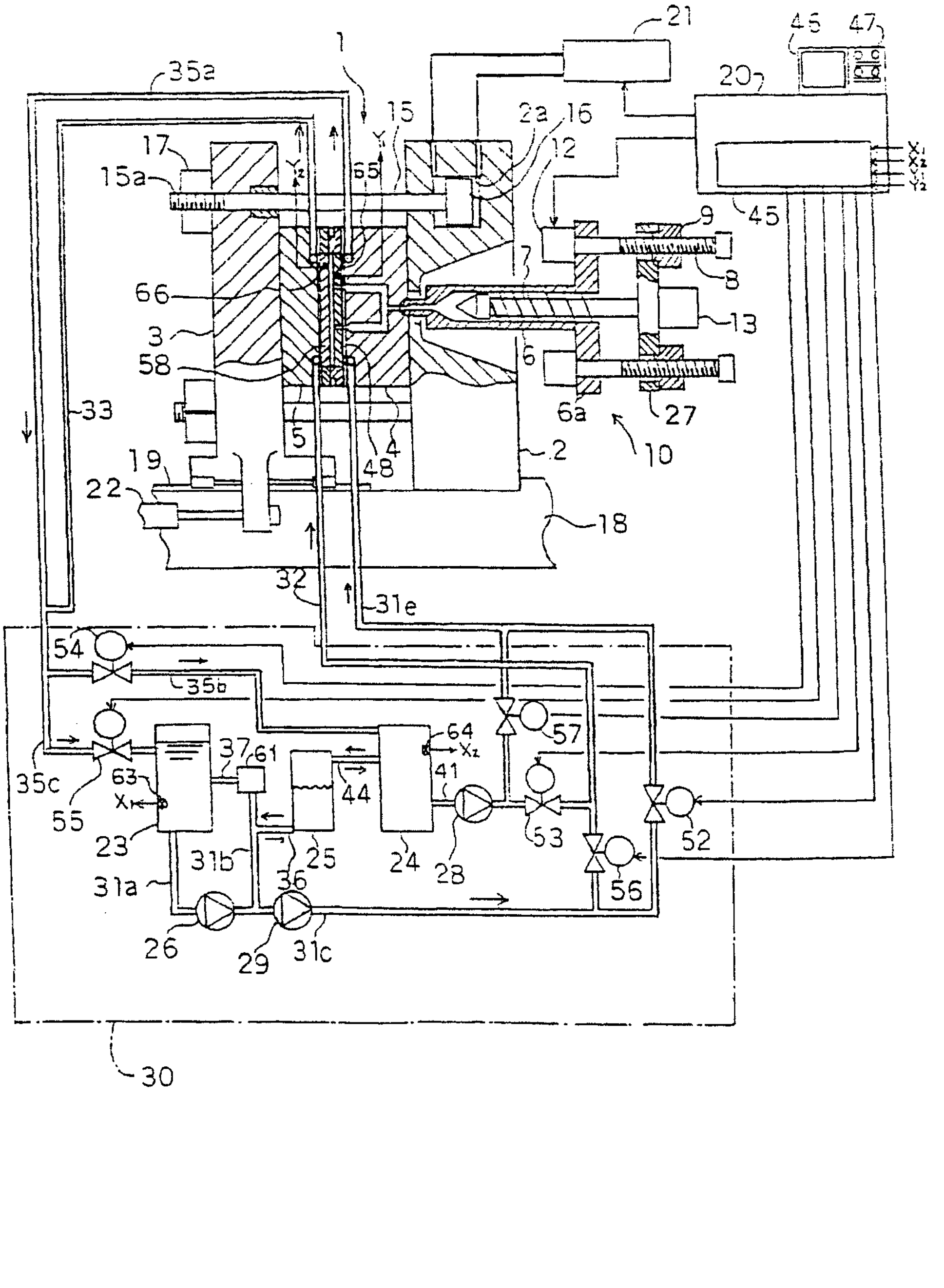
1
2
2a
3
4
5
6
6a
7
8
9
10
12
13
15
15a
16
17
18
19
20
21
22
23
24
25
26
27
28
29
30
31a
31b
31c
31e
32
33
35a
35b
35c
36
37
41
44
45
46
47
48
52
53
54
55
56
57
58
61
63
64
65
66

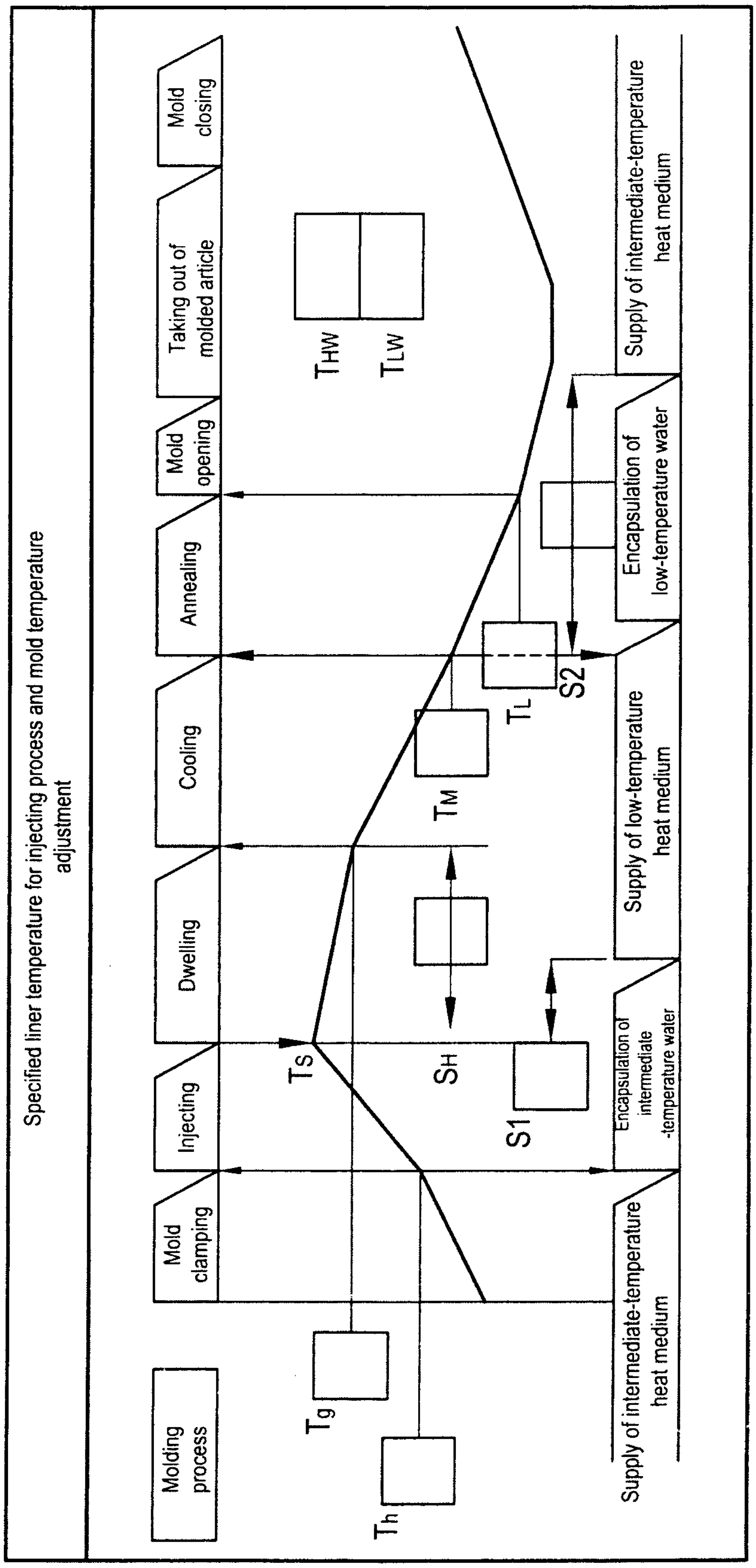
Specified liner temperature for injecting process and mold temperature adjustment
Molding process
Mold clamping
Injecting
Dwelling
Cooling
Annealing
Mold opening
Taking out of molded article
Mold closing
Th
Tg
Ts
SH
TM
TL
THW
TLW
S1
S2
Supply of intermediate-temperature heat medium
Encapsulation of intermediate -temperature water
Supply of low-temperature heat medium
Encapsulation of low-temperature water
Supply of intermediate-temperature heat medium

FIG.7

FIG. 8

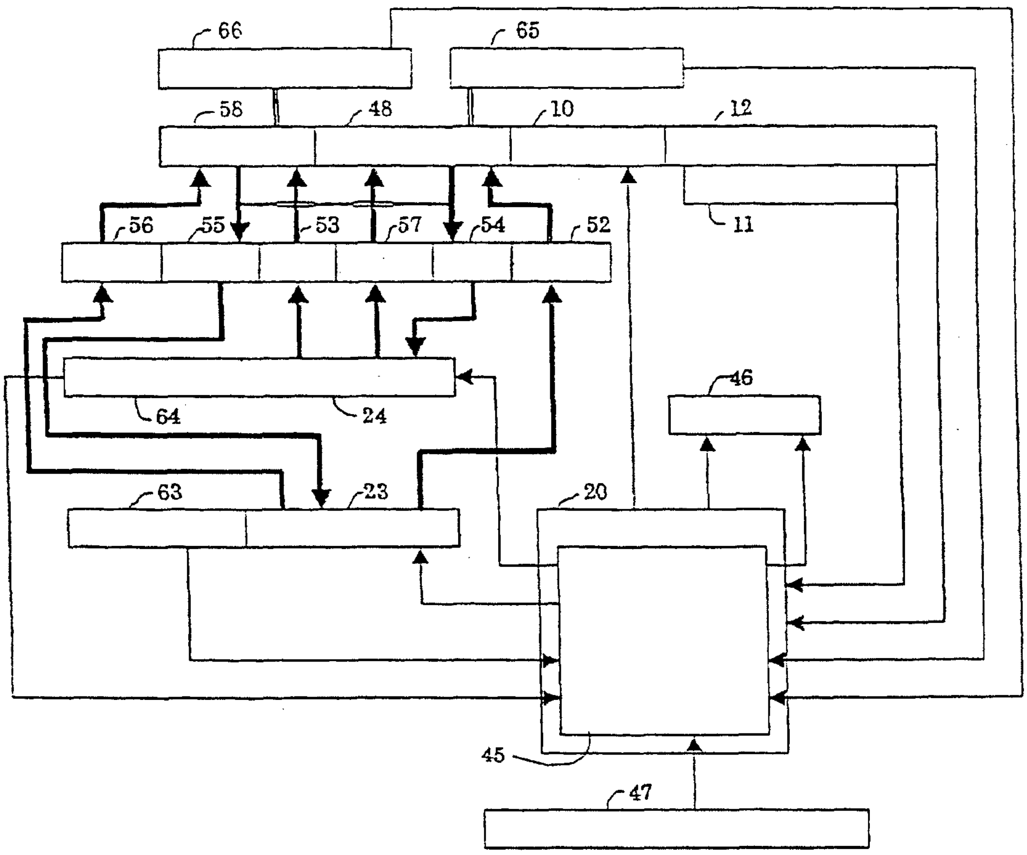


—— : Signal line
━━ : Hot water medium passage

[10] Injection unit
[11] Injection pressure detecting sensor
[12] Revolution number of ball screw for injection
[20] Injection molding machine controlling apparatus
[23] Low-temperature medium temperature adjusting apparatus
[24] Intermediate-temperature medium temperature adjusting apparatus
[45] Mold temperature control unit
[46] Image display means
[47] Heat medium temperature setting unit/timer setting unit
[48] Fixed side liner
[52~57] Opening/closing valve
[58] Movable side liner
[63] Low-temperature sensor
[64] Intermediate temperature sensor
[65] Fixed side liner temperature sensor
[66] Movable side liner temperature sensor

FIG. 9

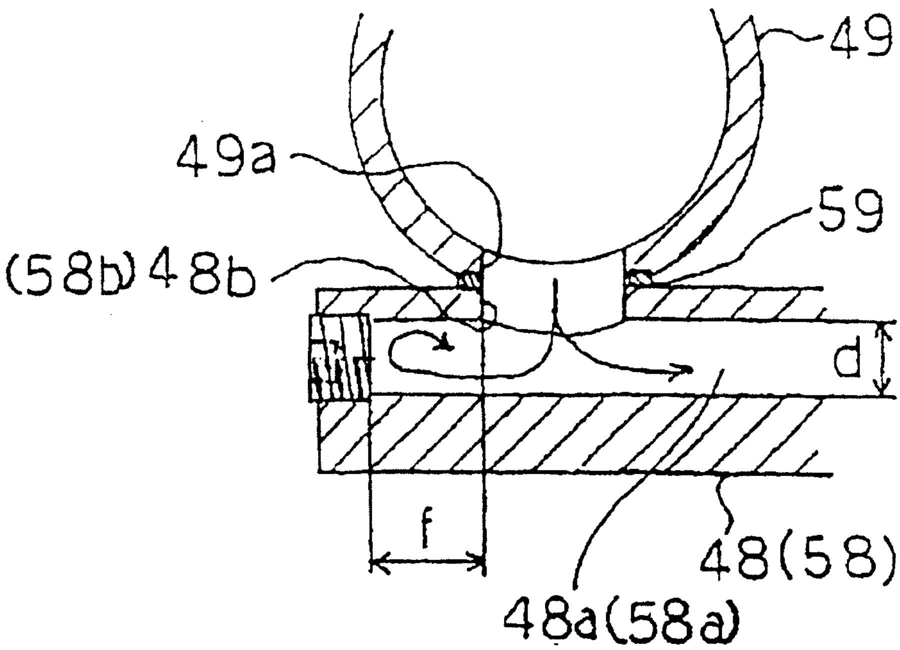

FIG. 10

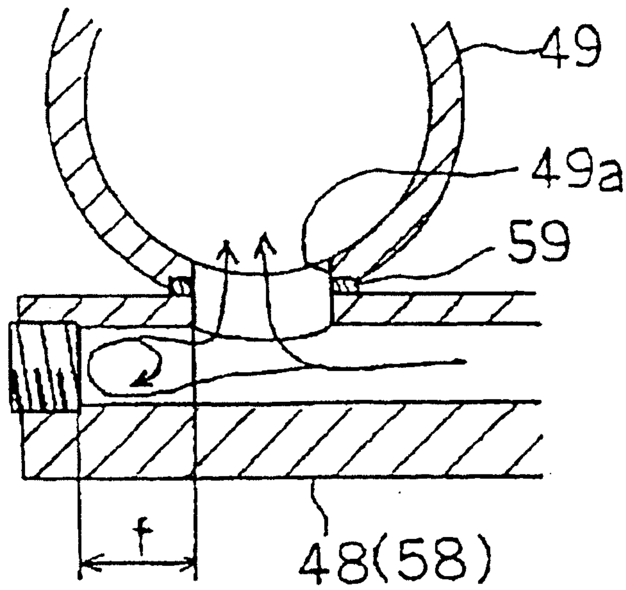

FIG. 11 (a) Just after injection

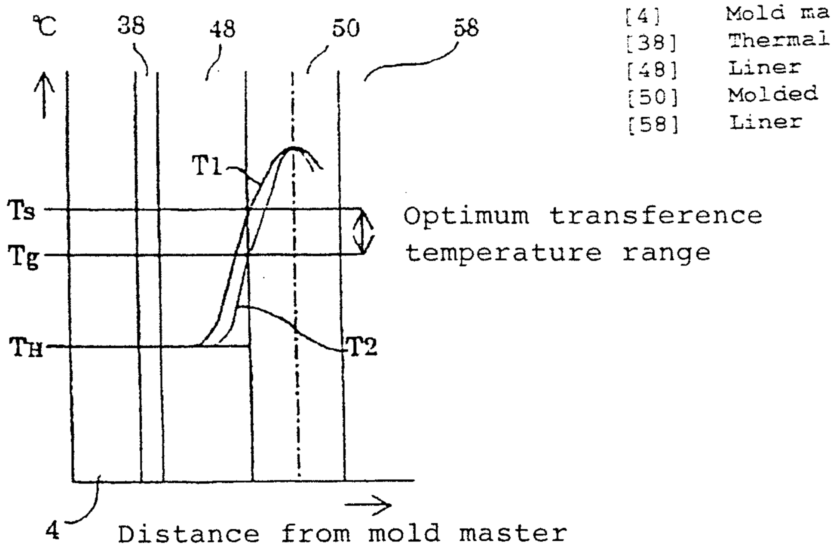


[4] Mold master
[38] Thermal insulation plate
[48] Liner
[50] Molded article
[58] Liner

FIG. 11 (b) 1 to 2 sec after injection

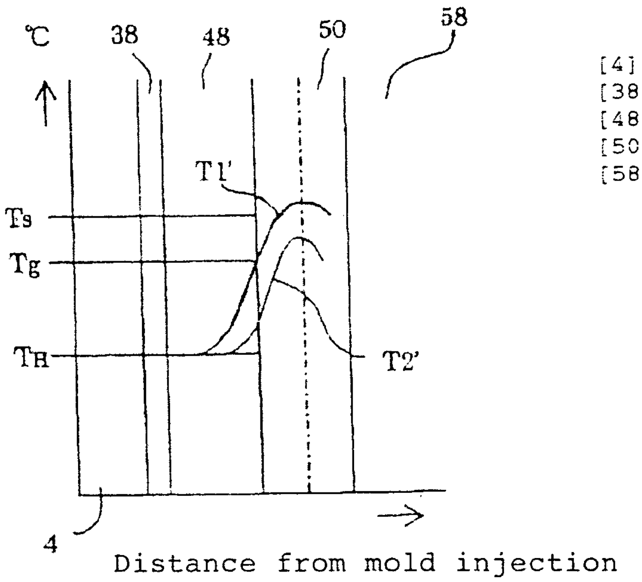


[4] Mold master
[38] Thermal insulation plate
[48] Liner
[50] Molded article
[58] Liner

FIG.12

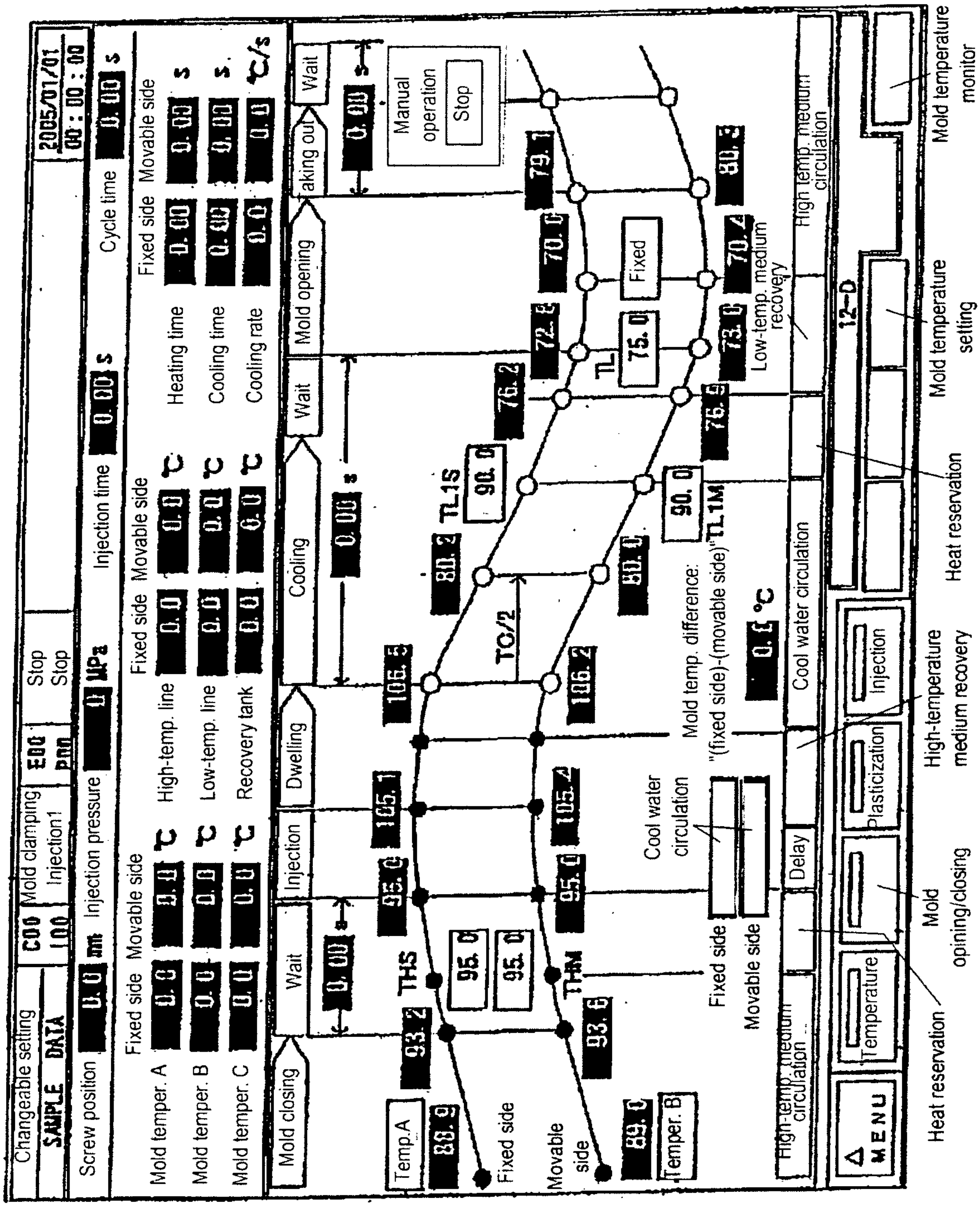
Changeable setting
SAMPLE DATA
Mold clamping
Injection1
Stop
Stop
2005/01/01
00 : 00 : 00
Screw position
mm
Injection pressure
MPa
Injection time
s
Cycle time
s
Fixed side
Movable side
Mold temper. A
Mold temper. B
Mold temper. C
High-temp. line
Low-temp. line
Recovery tank
Heating time
Cooling time
Cooling rate
℃/s
Mold closing
Wait
Injection
Dwelling
Cooling
Wait
Mold opening
Taking out
Wait
Manual operation
Stop
Temp.A
Temper. B
Fixed side
Movable side
THS
THM
TC/2
TL1S
TL1M
TL
Fixed
Cool water circulation
Mold temp. difference:
"(fixed side)-(movable side)"
℃
Low-temp. medium recovery
High-temp. medium circulation
Delay
Cool water circulation
12-D
MENU
Temperature
Plasticization
Injection
Heat reservation
Mold opining/closing
High-temperature medium recovery
Heat reservation
Mold temperature setting
Mold temperature monitor

FIG. 13 (a)

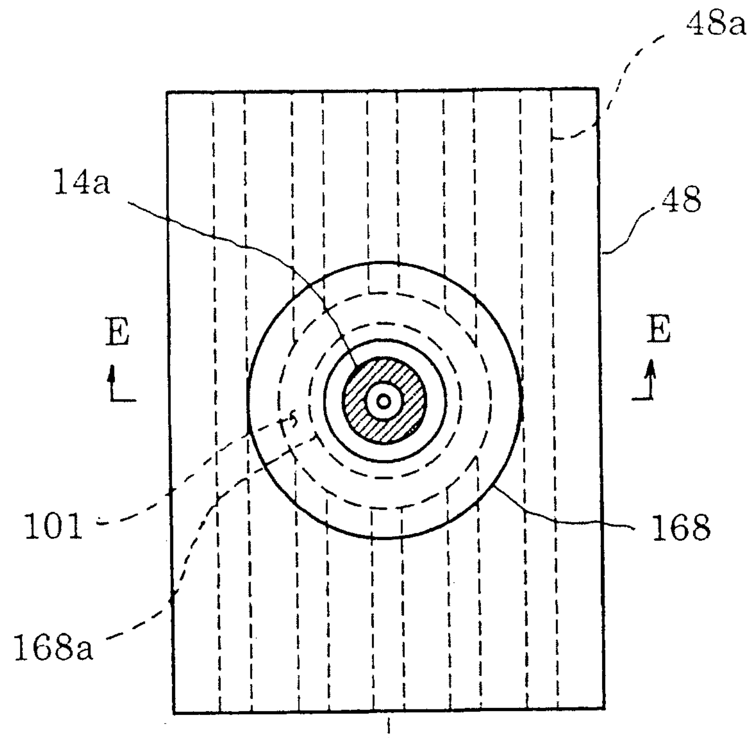


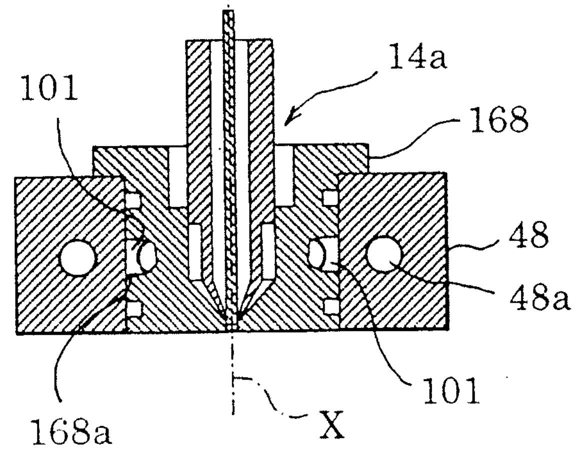


FIG. 13 (b)

FIG. 14 (a)

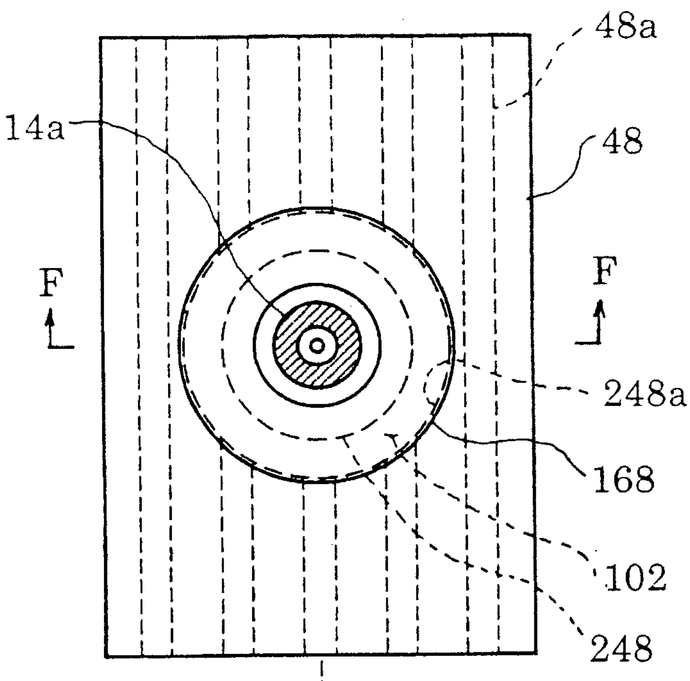


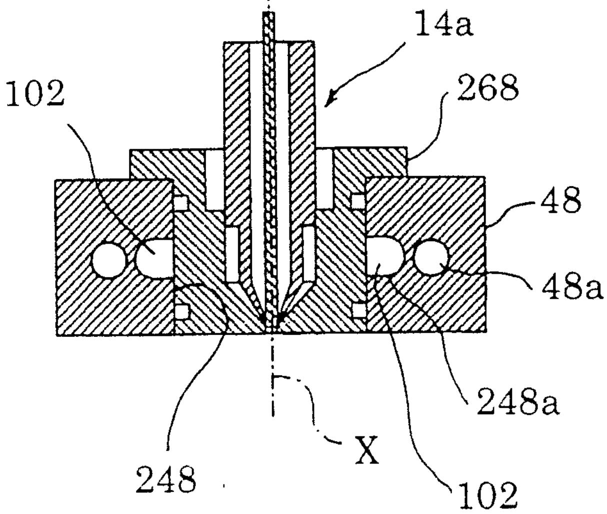


FIG. 14 (b)

FIG. 15 (a)

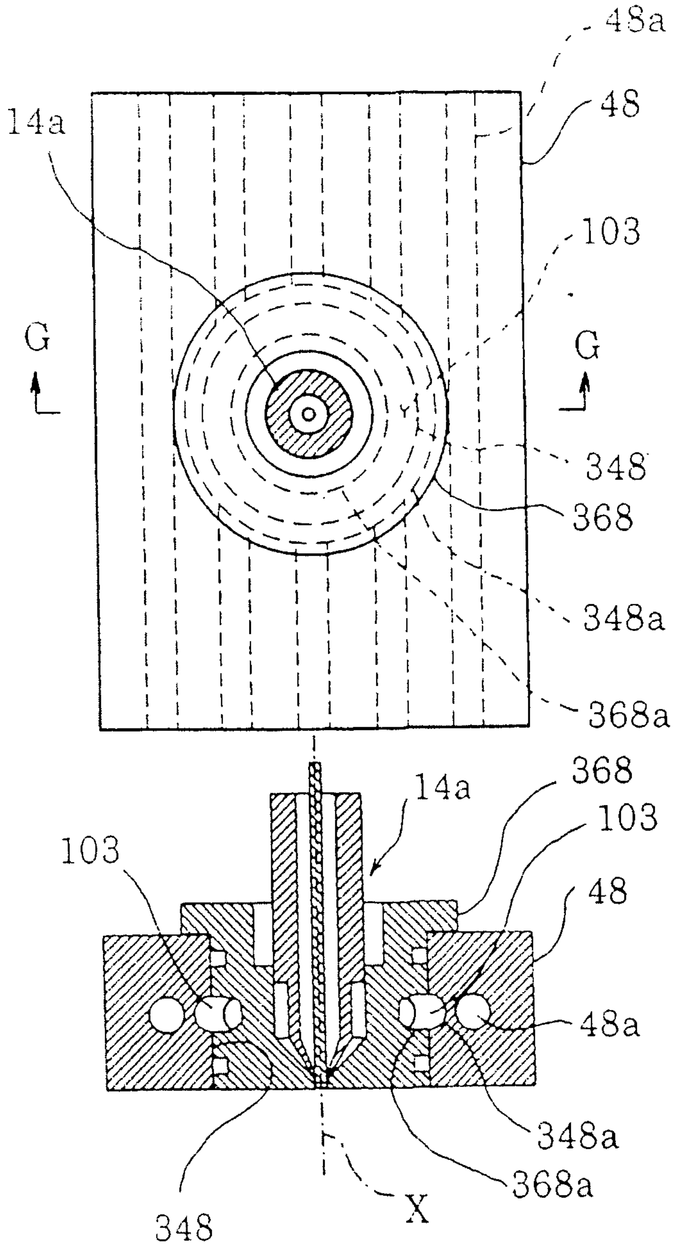


FIG. 15 (b)

FIG. 16 (a)

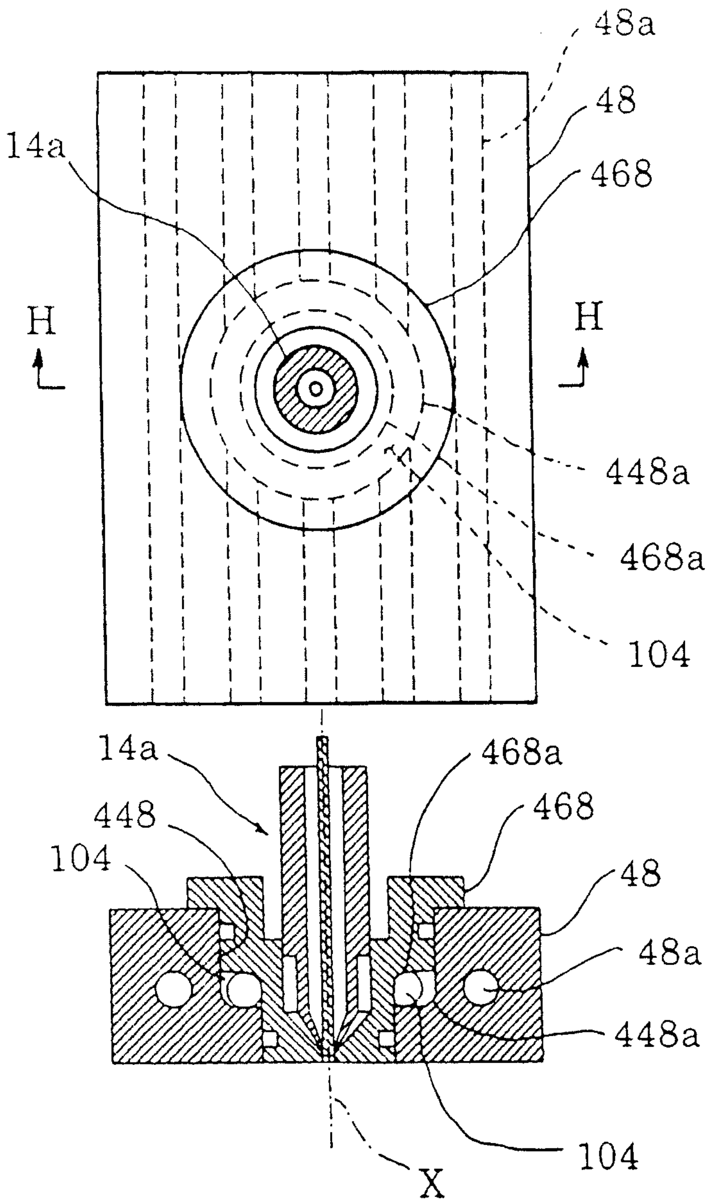


FIG. 16 (b)

FIG. 17 (a)

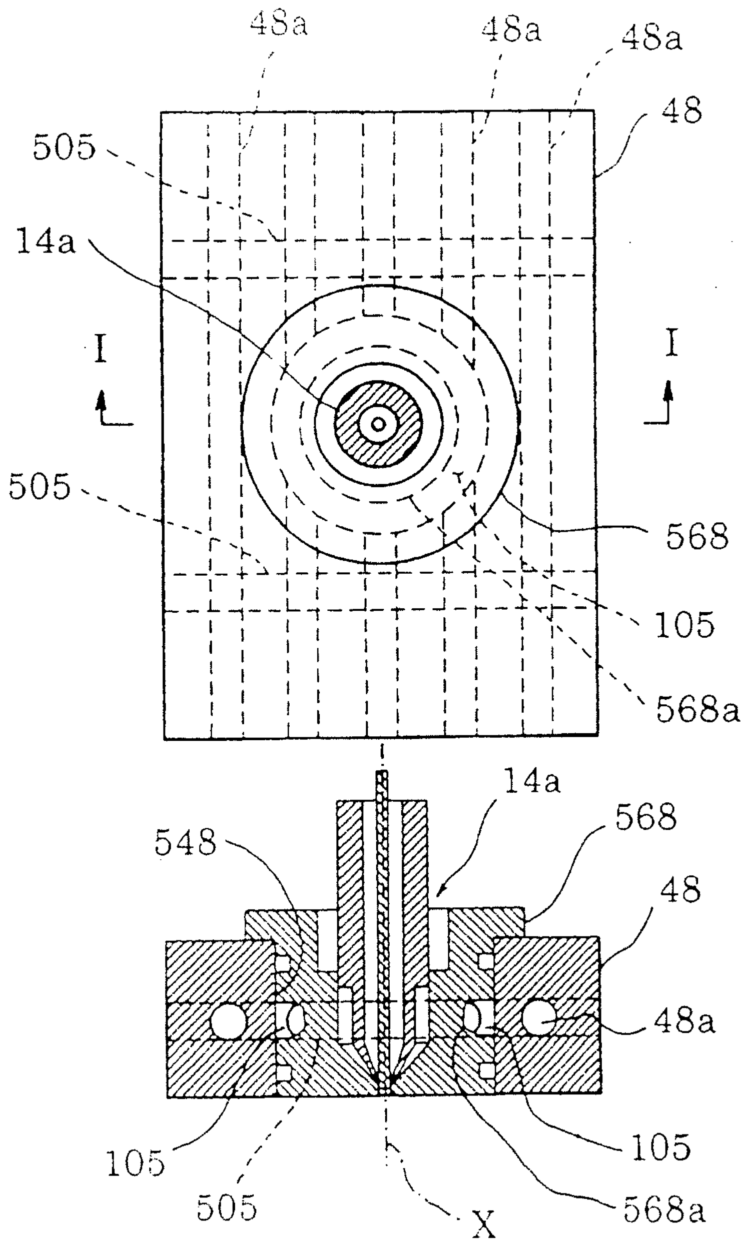


FIG. 17 (b)

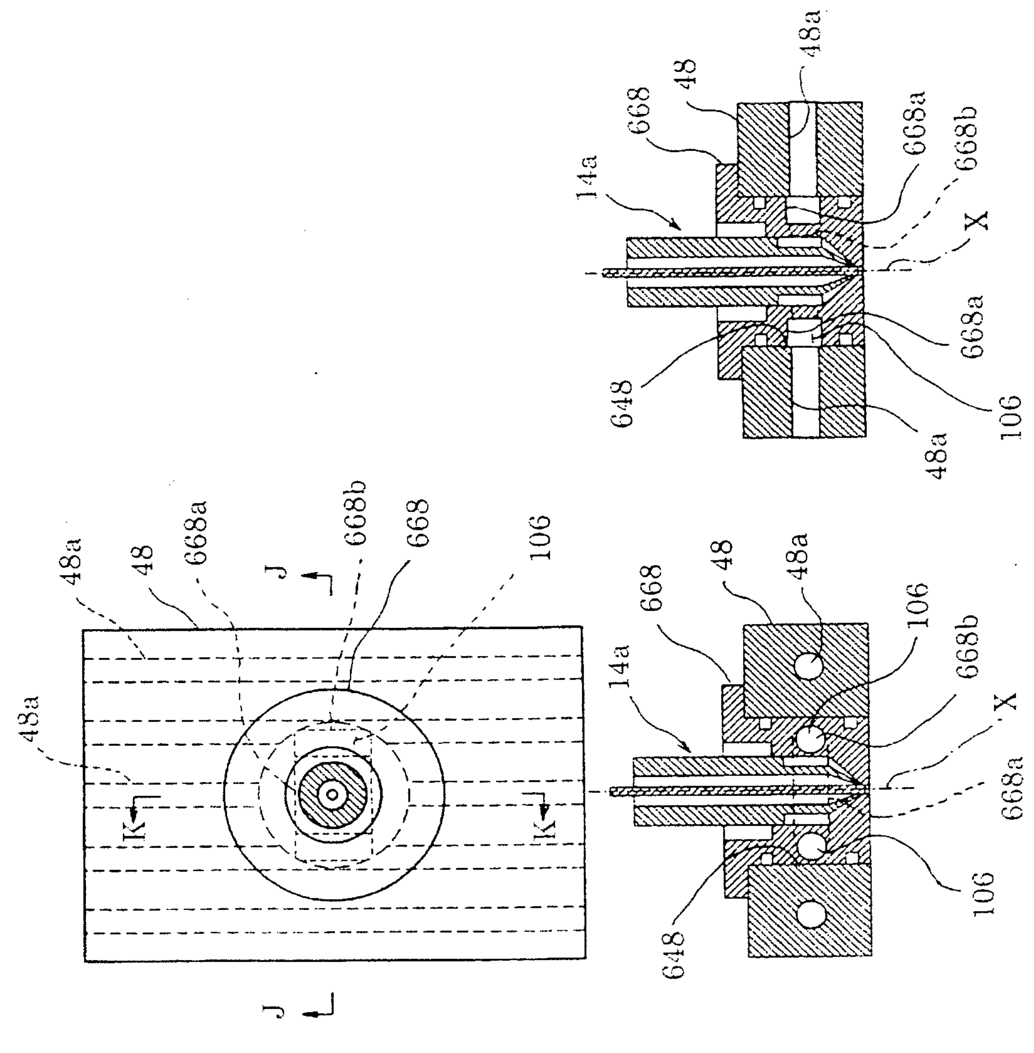


FIG. 18 (a)

FIG. 18 (b)

FIG. 18 (c)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3601463 B
- JP 2004322597 A
- GB 1523778 A